# EUROPEAN PATENT APPLICATION

(11) **EP 4 489 475 A1**
(43) Date of publication of application: **08.01.2025**
(21) Application number: 22929392.3
(22) Date of filing: 04.03.2022
(51) Int. Cl.: H04W 36/08, H04W 88/08

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); HUANG, Lei, Singapore 049483 (SG)
(74) Representative: RGTH
(86) International application number: PCT/CN2022/079409
(87) International publication number: WO 2023/164949

(57) **Abstract**

A wireless communication method and device are provided. The method includes: indicating, by an access point device, that at least one station device changes media access address (MAC) address information and identifier information of the at least one station device. Therefore, the station device and the access point device can use a MAC address and identifier information changed simultaneously to perform frame interaction, which is beneficial to reduce a problem of user privacy leakage.

## Description

### TECHNICAL FIELD

The present application relates to the field of communications, and in particular, to a wireless communication method and device.

### BACKGROUND

In an 802.11 network, since a media access control (MAC) address of a device is globally unique and permanently unchanged, a network attacker can track a user by tracking the MAC address of the device, causing a large amount of privacy information of the user to be exposed in the network. Aiming at this problem, IEEE 802.11 proposes that station devices use randomized and changing MAC addresses to improve user privacy.

In the 802.11 network, an association identifier (AID) or unassociation identifier (UID) can also be used to identify a station device. And in some frames, the AID or UID is transmitted in plaintext, which can be used to track the station device, thereby leaking user privacy. Therefore, how to perform interactions to protect user privacy is an urgent problem to be solved.

### SUMMARY

The present application provides a wireless communication method and device. A station device can use a MAC address and identifier information that are changed simultaneously to perform frame exchanges, which is beneficial to reduce a problem of user privacy leakage.

In a first aspect, a wireless communication method is provided, which includes: indicating, by an access point device, that at least one station device changes media access address (MAC) address information and identifier information of the at least one station device.

In a second aspect, a wireless communication method is provided, which includes: changing, by a station device, media access address (MAC) address information and identifier information of the station device based on an indication of an access point device; or autonomously changing, by a station device, media access address (MAC) address information and identifier information of the station device.

In a third aspect, an access point device is provided, which is configured to perform the method in the first aspect or various implementations thereof.

Specifically, the access point device includes a functional module for performing the method in the first aspect or various implementations thereof.

In a fourth aspect, a station device is provided, which is configured to perform the method in the second aspect or various implementations thereof.

Specifically, the station device includes a functional module for performing the method in the second aspect or various implementations thereof.

In a fifth aspect, an access point device is provided, which includes a processor and a memory. The memory is configured to store a computer program, and the processor is configured to call and run the computer program stored in the memory to perform the method in the first aspect or various implementations thereof.

In a sixth aspect, a station device is provided, which includes a processor and a memory. The memory is configured to store a computer program, and the processor is configured to call and run the computer program stored in the memory to perform the method in the second aspect or various implementations thereof.

In a seventh aspect, a chip is provided, which is used for implementing the method in any one of the first to second aspects or various implementations thereof.

Specifically, the chip includes: a processor configured to call and run a computer program from a memory, to cause a device equipped with the chip to perform the method in any one of the first to second aspects or various implementations thereof.

In an eighth aspect, a computer-readable storage medium is provided, which is used for storing a computer program, where the computer program causes a computer to perform the method in any one of the first to second aspects or various implementations thereof.

In a ninth aspect, a computer program product is provided, which includes computer program instructions, where the computer program instructions cause a computer to perform the method in any one of the first to second aspects or various implementations thereof.

In a tenth aspect, a computer program is provided, the computer program, when executed on a computer, causes the computer to perform the method in any one of the first to second aspects or various implementations thereof.

Through above technical solutions, the MAC address information and identifier information of the station device can be changed simultaneously, which is beneficial to reduce a problem of user privacy leakage caused by changing only one identifier. For example, the access point device may initiate a change of the MAC address information and identifier information of the station device. For another example, the station device may also initiate a change of the MAC address information and identifier information of the station device.

### BRIEF DESCRIPTION OF THE DRAWINGS

FIG. 1 is a schematic diagram of a communication system architecture provided by embodiments of the present application.
FIG. 2 is a schematic interaction diagram of a wireless communication method provided by embodiments of the present application.
FIG. 3 is a schematic format diagram of an Extended Capabilities element carrying identifier change capability information provided by embodiments of the present application.
FIG. 4 is a schematic format diagram of another Extended Capabilities element carrying identifier change capability information provided by embodiments of the present application.
FIG. 5 is a schematic interaction diagram of an example in which an access point device indicates changing MAC address information and identifier information in a broadcast manner, in accordance with embodiments of the present application.
FIG. 6 is a schematic interaction diagram of another example in which an access point device indicates changing MAC address information and identifier information in a broadcast manner, in accordance with embodiments of the present application.
FIG. 7 is a schematic interaction diagram of an example in which an access point device indicates changing MAC address information and identifier information in a multicast manner, in accordance with embodiments of the present application.
FIG. 8 is a schematic interaction diagram showing that an access point device indicates changing MAC address information and identifier information based on a request of a station device, in accordance with embodiments of the present application.
FIG. 9 is a schematic interaction diagram of an example in which an access point device indicates changing MAC address information and identifier information in a unicast manner, in accordance with embodiments of the present application.
FIG. 10 is a schematic interaction diagram of an example in which an access point device indicates changing MAC address information and identifier information in a unicast manner based on a request of a station device, in accordance with embodiments of the present application.
FIGS. 11 to 20 are schematic format diagrams of identifier change elements provided by embodiments of the present application.
FIG. 21 is a schematic diagram of a format for carrying AID change time information through a TIM element provided by embodiments of the present application.
FIG. 22 is a schematic interaction diagram of an example in which an access point device and a station device implicitly indicate changing MAC address information and identifier information in a unicast manner, in accordance with embodiments of the present application.
FIG. 23 is a schematic block diagram of an access point device provided by embodiments of the present application.
FIG. 24 is a schematic block diagram of a station device provided by embodiments of the present application.
FIG. 25 is a schematic block diagram of a communication device provided by embodiments of the present application.
FIG. 26 is a schematic block diagram of a chip provided by embodiments of the present application.
FIG. 27 is a schematic block diagram of a communication system provided by embodiments of the present application.

### DETAILED DESCRIPTION

Technical solutions of the embodiments of the present application will be described below, in conjunction with the drawings of the embodiments of the present application. Obviously, the described embodiments are merely some but not all of embodiments of the present application. All other embodiments obtained based on the embodiments of the present application by those skilled in the art without creative efforts shall be included in the protection scope of the present application.

The technical solutions of the embodiments of the present application may be applied to various communication systems, such as a wireless local area network (WLAN), wireless fidelity (Wi-Fi) or other communication systems.

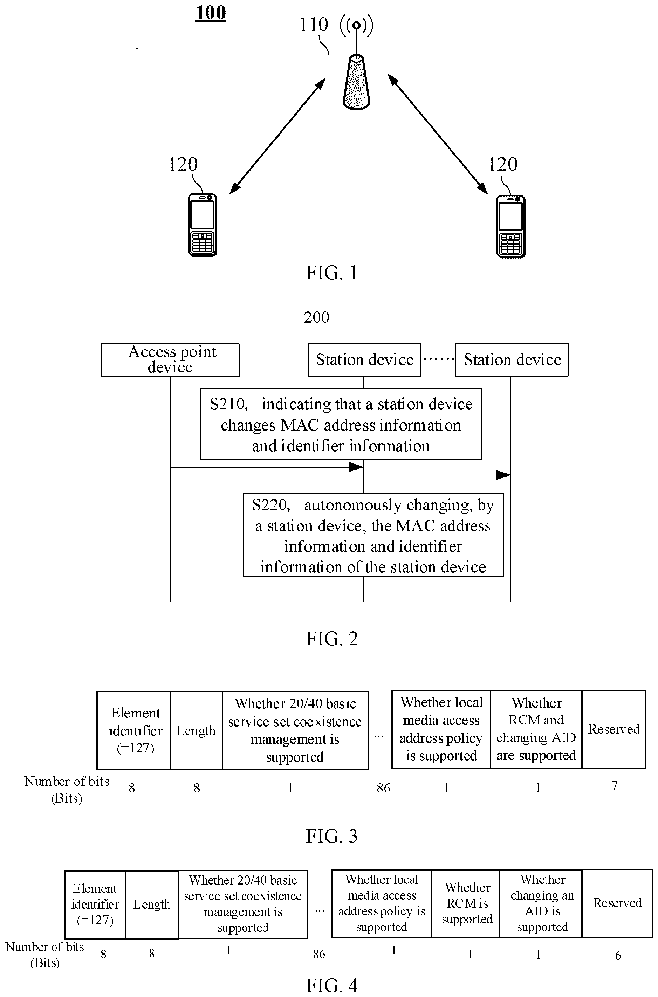

For example, a communication system 100 in which the embodiments of the present application are applied is shown in FIG. 1. The communication system 100 may include an access point (AP) 110 and a station (STA) 120 that accesses a network through the AP 110.

In some scenarios, an AP is referred to as an AP STA. That is, in a sense, the AP is also a STA.

In some scenarios, a STA is also referred to as a non-AP STA.

A communication in the communication system 100 may be a communication between the AP and non-AP STA, a communication between non-AP STAs, or a communication between a STA and a peer STA. The peer STA may refer to a device that has a peer-to-peer communication with the STA. For example, the peer STA may be an AP or a non-AP STA.

The AP is the equivalent of a bridge between a wired network and a wireless network, whose main role is to connect various wireless network clients together and then connect the wireless network to Ethernet. The AP device may be a terminal device (e.g., a mobile phone) or network device (e.g., a router) with a Wi-Fi chip.

It can be understood that a role of the STA in the communication system is not fixed. For example, in some scenarios, in a case where a mobile phone is connected to a router, the mobile phone is a non-AP STA, and in a case where the mobile phone serves as a hotspot for other mobile phones, the mobile phone acts as an AP.

The AP and the non-AP STA may be devices applied in an Internet of Vehicles, Internet of Things (IoT) nodes, sensors, etc., in the IoT, smart cameras, smart remote controls, smart watermeters, smart electricity meters, etc., in a smart home, and sensors in a smart city, or the like.

In some embodiments, the non-AP STA can support an 802.11be standard. The non-AP STA can also support various current and future wireless local area networks (WLAN) standards of the 802.11 family, such as 802.11ax, 802.11ac, 802.11n, 802.11g, 802.11b and 802.11a.

In some embodiments, the AP may be a device supporting the 802.11be standard. The AP may also be a device supporting various current and future WLAN standards of the 802.11 family, such as 802.11ax, 802.11ac, 802.11n, 802.11g, 802.11b, and 802.11a.

In the embodiments of the present application, the STA may be a device supporting the WLAN/WiFi technology, such as a mobile phone, a pad, a computer, a virtual reality (VR) device, an augmented reality (AR) device, a wireless device in industrial control, a set-top box, a wireless device in self driving, an in-vehicle communication device, a wireless device in remote medical, a wireless device in smart grid, a wireless device in transportation safety, a wireless device in smart city, a wireless device in smart home, a wireless communication chip/ASIC/SoC, or the like.

Frequency bands supportable by the WLAN technology may include, but are not limited to: low frequency bands (e.g., 2.4 GHz, 5 GHz, and 6 GHz), and high frequency bands (e.g., 60 GHz).

FIG. 1 exemplarily shows one AP STA and two non-AP STAs. Optionally, the communication system 100 may include multiple AP STAs and another number of non-AP STAs, which are not limited in the embodiments of the present application.

It can be understood that a device in a network/system having a communication function in the embodiments of the present application may be referred to as a communication device. In an example of the communication system 100 shown in FIG. 1, communication devices may include the AP 110 and the STA 120 which have the communication function. The AP 110 and the STA 120 may be specific devices described above and will not be repeated here. The communication devices may further include other devices in the communication system 100, such as a network controller, a gateway and other network entities, which are not limited in the embodiments of the present application.

It can be understood that terms "system" and "network" are often used interchangeably herein. The term "and/or" herein is only an association relationship to describe associated objects, indicating that there may be three relationships. For example, "A and/or B" may include: A alone, both A and B, and B alone. In addition, the character "/" herein generally indicates that related objects before and after this character are in an "or" relationship.

It can be understood that the "indicate" mentioned in the embodiments of the present application may mean a direct indication or an indirect indication, or represent that there is an association relationship. For example, A indicating B may mean that A directly indicates B, e.g., that B may be obtained through A; or it may mean that A indirectly indicates B, e.g., that A indicates C, and B may be obtained through C; or it may mean that there is an association relationship between A and B.

The term "correspond" mentioned in the embodiments of the present application may mean a direct or indirect relationship between two, or a relationship of association between the two, or a relationship of indicating and being indicated, or configuring and being configured, etc.

In embodiments of the present application, "predefined" may be implemented by pre-saving corresponding codes, tables or other means capable of being used to indicate relevant information in devices (e.g., including an access point and a station), specific implementations of which are not limited in the present application. For example, predefined may mean defined in the protocol.

To facilitate understanding of the technical solutions of the embodiments of the present application, related technologies of the present application are described below.

### 1. AID/UID

According to an IEEE 802.11 protocol, in an infrastructure basic service set (BSS) network, in a case where a STA associates with an AP or a personal basic service set control point (PBSS control point, PCP), the AP or PCP will allocate an AID value to the STA as an identifier of the STA in the network. Similarly, the AP may allocate a UID value to a STA that has not performed an association operation as an identifier of the STA in the network during a specific interaction (such as fine time measurement (FTM) or sensing).

In a mesh basic service set (mesh BSS) network, in a case where a peer STA performs mesh peering, the STA receives a mesh peering open frame. A STA that receives a mesh peering open request will allocate an AID value to a STA that sends the mesh peering open frame as an identifier of the STA that sends the mesh peering open frame in the network.

The AID will be carried in multiple types of control frames or management frames, which is used for indicating information sent to a corresponding station. For example, the multiple types of control frames may include a very high throughput (VHT) null data PPDU announcement frame (NDPA), a high efficiency (HE) NDPA, a multi-STA BlockAck, and a trigger frame. For example, the multiple types of management frames may include an association response frame, a reassociation response frame, a probe response frame, a millimeter wave device beacon frame (DMG Beacon), an information response, an unprotected DMG action frame, a tunneled direct link setup (TDLS) request (Setup Request), a tunneled direct link setup (TDLS) response (Setup Response), a mesh beacon frame, and a mesh peering confirm. In these frames, the AID/UID value is usually transmitted in plaintext.

### 2. Randomized and changing MAC (RCM) addresses

In an 802.11 network, since a MAC address of a device is globally unique and permanently unchanged, a network attacker can easily track a user by tracking the MAC address of the device, causing a large amount of privacy information of the user to be exposed in the network. Aiming at this problem, IEEE 802.11 proposes that STA use RCM addresses to improve user privacy.

For example, the STA generates an initial randomized (random) MAC address according to its system time, and associates with the AP. If the STA associates successfully, the AP will allocate a new MAC address to the STA. After receiving the new MAC address allocated by the AP, the STA will replace the initial randomized MAC address.

For another example, after the STA successfully associates with the AP, the AP allocates one or more "prefixes" to the STA. After the STA receives the "prefix(s)" allocated by the AP, when the STA subsequently uses a randomized MAC address to communicate with the AP, the STA will add a corresponding "prefix" into a frame, and the AP will identify the STA through this "prefix".

For yet another example, after the STA successfully associates with the AP, they negotiate a key for generating a randomized MAC address. The AP informs, in a beacon frame, the STA how long before the STA generates and uses a new randomized MAC address, or informs that the STA sends a request to the AP before the STA generates and uses a new randomized MAC address.

In view of this, in some embodiments of the present application, an identifier of a station device may be protected in a corresponding manner according to a type of the identifier of the station device transmitted in plaintext.

For example, for an identifier upon which the pairwise temporal key security association (PTKSA) relies, such as a pairwise master key identifier (PMKID), or a persistent MAC address (an address used for uniquely identifying a station device, used in an A3 or A4 field in a frame), a method of encryption for protection is used.

For another example, for an identifier that is not relied upon by the PTKSA, such as an over-the-air MAC address (i.e., an address used in an A1 or A2 field in a frame), an AID, or a UID, a method of randomly changing its value for protection is used.

The persistent MAC address, as a unique identifier of a station device in the network, generally cannot be changed, because station devices at two remote ends (i.e., over a distribution system (over-the-DS)) need to use this address to identify a communication between them. If a station device at one end changes its persistent MAC address, and a station device at the other end cannot be informed in time, communication failure will occur.

In theory, the identifier upon which the PTKSA relies should be the persistent MAC address. When receiving an encrypted frame, a station device also needs to find a corresponding temporal key (TK) through the persistent MAC address of a sending terminal (transmitter) to correctly decrypt the frame.

However, the persistent MAC address and the over-the-air MAC address are usually the same, so MAC addresses of both parties used when generating the PTKSA (STA-A-MAC and STA-B-MAC, or authenticator MAC address (AA) and supplicant MAC address (SPA)) are all over-the-air MAC addresses. When receiving the encrypted frame, the station device also uses a transmitter address (TA, i.e., an address of an A2 field in the frame) in the frame to find a corresponding TK, so as to correctly decrypt the frame. And the station device uses the transmitter address in the frame to find a corresponding replay counter to determine whether to receive or discard the frame.

In a case where the over-the-air MAC address uses a randomized and changing MAC address, MAC addresses of both parties (STA-A-MAC and STA-B-MAC, or AA and SPA) used for generating the PTKSA should all be persistent MAC addresses. When receiving an encrypted frame, the station device should find a persistent MAC address of a corresponding transmitter through a transmitter address, use the persistent MAC address of the transmitter to find a corresponding TK to correctly decrypt the frame, and use the persistent MAC address of the transmitter to find a corresponding replay counter to determine whether to receive or discard the frame.

Based on the above process, it can be seen that if the persistent MAC address is sent in plaintext, it is easy to be spoofed by an attacker. If the persistent MAC address changes, a receiving terminal (receiver) will not be able to correctly receive the encrypted frame. Similarly, a PMKID used for generating the PTKSA can be easily spoofed by the attacker if it is sent in plaintext. If the PMKID changes, the receiving terminal will not be able to find a previously cached pairwise master key (PMK), and thus will not be able to establish the PTKSA, thereby resulting in incorrect reception of the encrypted frame. Therefore, the identifier that is relied upon by the PTKSA can only be protected by the method of encryption.

In practical applications, for an identifier that is not relied on by the PTKSA, such as the over-the-air MAC address, even if a STA uses a randomized and changing MAC address, an AID or a UID can also be used to identify a STA in the network. The AID for the STA is assigned during association or mesh peering, and the UID for the STA is assigned during a specific interaction. The AID or UID of the STA will not change in subsequent use and will be transmitted in plaintext in some frames. Thus, the AID or UID can be used to track the STA, thereby leaking user privacy. Therefore, how to perform interactions to protect user privacy is an urgent problem to be solved.

To facilitate understanding of the technical solutions of the embodiments of the present application, the technical solutions of the present application are described in detail below through specific embodiments. The above related technologies, as optional solutions, may be arbitrarily combined with the technical solutions of the embodiments of the present application, and those combined solutions all fall within the protection scope of the embodiments of the present application. The embodiments of the present application include at least part of the following contents.

FIG. 2 is a schematic interaction diagram of a wireless communication method 200, in accordance with the embodiments of the present application.

In some embodiments, as shown in FIG. 2, the method 200 includes the following step:
S210, indicating, by an access point device, that at least one station device changes MAC address information and identifier information of the at least one station device.

Correspondingly, the at least one station device changes the MAC address information and identifier information based on an indication of the access point device.

In some other embodiments, as shown in FIG. 2, the method 200 includes the following step:
S220: autonomously changing, by a station device, the media access address (MAC) address information and identifier information of the station device.

In the embodiments of the present application, unless otherwise specified, a station device may be referred to as a non-AP STA, and an access point device may be referred to as an AP STA.

In the embodiments of the present application, the access point device may also be a PCP.

In some embodiments, the identifier information of the station device may include an AID of the station device and/or a UID of the station device.

In the following embodiments, the identifier information of the station device is described by taking AID information as an example. In a case where the identifier information of the station device is UID information, implementations are similar, which will not be repeated here.

In some embodiments of the present application, a MAC address and identifier information of the station device need to be changed simultaneously.

That is, the changed MAC address and identifier information of the station device need to take effect at the same time.

This is because both the MAC address and AID/UID of the station device can be used to track the station device. The station device may still be tracked if both changes do not take effect simultaneously. For example, STA1 uses a MAC address M1 and an AID value A1 at moment 1, and only changes the MAC address to M2 at moment 2. The tracker still has a high probability of determining that M2 identifies STA1 through A1. Similarly, if only the AID value is changed to A2 at moment 2, the tracker still has a high probability of determining that A2 identifies STA1 through M1.

Therefore, in embodiments of the present application, interaction is performed by simultaneously changing the MAC address information and identifier information of the station device, which is beneficial to reduce the privacy leakage problem caused by a change of one identifier (e.g., the MAC address) of the station device while another identifier (e.g., the AID) is not changed.

In some embodiments, MAC address after changed (or a new MAC address) of the station device may be pre-allocated by the access point device.

In some embodiments, identifier information after changed (or new identifier information, such as new AID information) of the station device may be pre-allocated by the access point device.

For example, after STA1 successfully associates with the AP, the AP allocates multiple candidate randomized MAC addresses (e.g., MAC_A1, MAC_A2, MAC_A3, ..., MAC_Am) and multiple candidate AIDs (e.g., AID_A1, AID_A2, ..., AID_An) to STA1, where values of m and n are both greater than 1, and the values of m and n may be the same or different.

In some embodiments, the MAC address information after changed and identifier information after changed of the station device are determined by the access point device and the station device according to a preset rule. That is, the access point device and the station device may determine the MAC address information after changed and identifier information after changed of the station device in a consistent manner, thereby ensuring that the access point device and the station device have consistent understanding of the MAC address information after changed of the station device and have consistent understanding of the identifier information after changed of the station device.

In some embodiments, the MAC address information after changed (i.e., new MAC address information) of the station device is determined based on at least one of the following information:
MAC address information before changed of the station device (i.e., old MAC address information), and identifier information before changed of the station device (i.e., old identifier information).

That is, the new MAC address information of the station device may be derived or calculated based on the old MAC address information and/or old identifier information of the station device.

For example, the new MAC address information of the station device is derived or calculated based on the old MAC address information and/or old AID information.

In some embodiments, a key negotiated between the station device and the access point device may also be considered when deriving the new MAC address information of the station device, which is beneficial to further improve security of the new MAC address information to be determined.

In some embodiments, the identifier information after changed (i.e., new identifier information) of the station device is determined based on at least one of the following information:
MAC address information before changed of the station device (i.e., old MAC address information), the identifier information before changed of the station device (i.e., old identifier information), and the MAC address after changed of the station device (i.e., new MAC address information).

That is, the new identifier information of the station device may be derived or calculated based on at least one of the old MAC address information, the old identifier information, and the new MAC address information of the station device.

For example, the new AID information of the station device is derived or calculated based on the old MAC address information.

For another example, the new AID information of the station device is derived or calculated based on the old MAC address information and old AID information.

For yet another example, the new AID information of the station device is derived or calculated based on the old MAC address information, old AID information and the new MAC address information.

In some embodiments, a key negotiated between the station device and the access point device may also be considered when deriving the new AID information of the station device, which is beneficial to further improve security of new AID information to be determined.

With reference to a specific example, it is assumed that a MAC address currently used by STA1 is MAC_A2, a MAC address after changed is recorded as MAC_A3, and an AID after changed is recorded as AID_A3. MAC_A3 may be derived or calculated based on MAC_A2, and AID_A3 may also be derived or calculated based on MAC_A2.

As an example, M = PRF(Key, Desc, MAC_A2), MAC_A3 = T_46 (M), AID_A3 = T_11 (M).

Here, PRF represents any pseudo-random function, such as Hash-based message authentication Code (HMAC), secure hash algorithm (SHA), HMAC-based key derivation function (HKDF), or password-based key derivation function (PBKDF).

Key represents a key negotiated between the AP and STA1 (for example, a temporary key (TK) generated by a four-way handshake process, or a key derivation key (KDK) generated by a four-way handshake process), and Desc represents a predefined character string (for example, "ERCM") describing the method.

T_46 represents extracting 46 bits starting from a predefined position, such as the first 46 bits, or the last 46 bits, or 46 bits starting from the 20-th bit; and the extracted 46 bits are set as the least significant 46 bits in the MAC address (the highest 2 bits are fixed to 1 and 0, for indicating a randomized address) to obtain the MAC address after changed, i.e., MAC_A3.

T_11 represents extracting 11 bits starting from a predefined position, which does not overlap with the part extracted by T_46, such as 11 bits starting from the 47-th bit, or 11 bits starting from the last 57-th bit, or 11 bits starting from the 67-th bit; and the extracted 11 bits are set as the least significant 11 bits of the AID to obtain the AID after changed, i.e., AID_A3.

In some embodiments, the MAC address information of the station device and the AID information of the station device may have a corresponding relationship, which may be pre-allocated by the access point device, or may be pre-determined by the station device according to a preset rule, which is not limited in the present application. When changing the MAC address information and identifier information, the station device may use a set of MAC address information and identifier information having a corresponding relationship to perform subsequent frame interaction.

In some embodiments of the present application, the access point device and the station device may exchange identifier change capability information, where the identifier change capability information is used for indicating whether changing MAC address information and/or identifier information is supported.

In some embodiments, exchanging, by the access point device and the station device, their respective identifier change capability information, may include:
sending, by the station device, identifier change capability information to the access point device, where the identifier change capability information is used for indicating whether the station device supports changing the MAC address information and/or identifier information; and/or
sending, by the access point device, identifier change capability information to the station device, where the identifier change capability information is used for indicating whether the access point device supports the station device to change the MAC address information and/or identifier information.

Optionally, the access point device may determine a target station device for initiating a change of MAC address information and identifier information according to the identifier change capability information of the station device.

Optionally, in a case where the access point device indicates changing the MAC address information and identifier information, the station device may also determine whether to change the MAC address information and identifier information according to the identifier change capability information of the station device.

Optionally, the station device may also request the access point device to initiate a change of the MAC address information and identifier information in a case where the access point device supports the station device to change the MAC address information and identifier information.

In some embodiments, whether the station device supports changing the MAC address information may also be expressed as: whether the station device supports an RCM address.

It will be noted that the following description takes an indication of the identifier change capability information of the station device as an example. An indication manner of whether the access point device supports the station device to change the identifier change capability information is similar to the indication manner of the identifier change capability information of the station device, which will not be repeated here for the sake of brevity.

In some embodiments, whether the station device supports changing the MAC address information and whether the station device supports changing the identifier information may be indicated independently.

For example, the station device may support changing both the MAC address information and the identifier information, or may support changing neither the MAC address information nor the identifier information, or may support changing only the MAC address information, or may support changing only the identifier information.

In some embodiments, the identifier change capability information includes second indication information and third indication information, the second indication information is used for indicating whether the station device supports changing the MAC address information, and the third indication information is used for indicating whether the station device supports changing the identifier information.

As an example, the second indication information may be 1 bit. The 1 bit is set to 1 for indicating that changing the MAC address information is supported, and it is set to 0 for indicating that changing the MAC address information is not supported. Alternatively, the 1 bit is set to 1 for indicating that changing the MAC address information is not supported, and it is set to 0 for indicating that changing the MAC address information is supported.

As an example, the third indication information may be 1 bit. The 1 bit is set to 1 for indicating that changing the identifier information is supported, and it is set to 0 for indicating that changing the identifier information is not supported. Alternatively, the 1 bit is set to 1 for indicating that changing the identifier information is not supported, and it is set to 0 for indicating that changing the identifier information is supported.

In some embodiments, whether the station device supports changing the MAC address information and whether the station device supports changing the identifier information may be indicated in combined.

For example, the station device may support changing both the MAC address information and the identifier information, or may neither support changing the MAC address information nor support changing the identifier information.

In some embodiments, the identifier change capability information includes fourth indication information, and the fourth indication information is used for indicating whether the station device supports changing the MAC address information and identifier information.

For example, the fourth indication information may be 1 bit. The 1 bit is set to 1 for indicating that changing the MAC address information and identifier information is supported, and it is set to 0 for indicating that changing the MAC address information and identifier information is not supported. Alternatively, the 1 bit is set to 1 for indicating that changing the MAC address information and identifier information is not supported, and it is set to 0 for indicating that changing the MAC address information and identifier information is supported.

In some embodiments, the identifier change capability information is carried by at least one of the following frames:
a beacon frame, a probe request frame, a probe response frame, an association request frame, a reassociation request frame, an association response frame, and a reassociation response frame.

For example, the station device may carry the identifier change capability information of the station device through at least one of the probe request frame, the association request frame, and the reassociation request frame.

For another example, the access point device may carry the identifier change capability information of the access point device through at least one of the beacon frame, the probe response frame, the association response frame, and the reassociation response frame.

In some embodiments, the identifier change capability information is carried in an existing element (e.g., an extended capabilities element) in a frame. For example, one or more reserved bits in the element are used to carry the identifier change capability information.

In some other embodiments, the identifier change capability information may also be carried in a newly defined element, which is not limited in the present application.

For example, a privacy protection capability element is newly defined, which is used for carrying privacy protection capability information. The privacy protection capability information includes the identifier change capability information, and the identifier change capability information may be carried in the privacy protection capability element.

For another example, an identifier change capability element is newly defined, which is used for carrying the identifier change capability information.

Optionally, any element (a newly defined element or existing element) used for carrying the identifier change capability information of the station device is carried in the above frame used by the station device to send the identifier change capability information, such as the probe request frame, the association request frame, or the reassociation request frame.

Optionally, any elements (a newly defined element or existing element) used for carrying the identifier change capability information of the access point device is carried in the above frames used by the access point device to send the identifier change capability information, such as the beacon frame, the probe response frame, the association response frame, and the reassociation response frame.

FIG. 3 is a schematic format diagram of an Extended Capabilities element carrying identifier change capability information provided by the embodiments of the present application.

As shown in FIG. 3, the Extended Capabilities element includes a field of whether RCM and changing AID are supported, which is used for indicating whether the station device supports changing a MAC address and identifier information, in other words, whether RCM or changing identifier information (e.g., changing AID) is supported.

For example, the field of whether RCM and changing AID are supported is set to 1 for meaning being supported, and it is set to 0 for meaning being not supported.

For another example, the field of whether RCM and changing AID are supported is set to 0 for meaning being supported, and it is set to 1 for meaning being not supported.

FIG. 4 is a schematic format diagram of another Extended Capabilities element carrying identifier change capability information provided by the embodiments of the present application.

As shown in FIG. 4, the Extended Capabilities element includes a field of whether RCM is supported and a field of whether changing an AID is supported. The field of whether RCM is supported is used for indicating whether the station device supports changing the MAC address, or in other words, whether the RCM is supported. The field of whether changing an AID is supported is used for indicating whether the station device supports changing the identifier information, for example, whether changing the AID is supported.

In some embodiments of the present application, changing the MAC address and identifier information of the station device may be indicated by the access point device, or notified by the access point device, or initiated by the access point device.

Optionally, changing the MAC address and identifier information initiated by the access point device may be carried out in a broadcast manner, a multicast manner, or a unicast manner.

In some embodiments of the present application, changing a MAD address and identifier information of the station device may be requested by the station device, or initiated by the station device.

Optionally, changing the MAC address and identifier information initiated by the station device may be carried out in a unicast manner, or the station device may also request the access point device to initiate changing the MAC address and identifier information in a multicast manner.

In some embodiments of the present application, S210 includes:
sending, by the access point device, a first frame to the at least one station device, the first frame being used to indicate (or notify) changing the MAC address information and identifier information of the at least one station device.

In some embodiments, the first frame is used to indicate (or notify) changing the MAC address information and identifier information of the at least one station device, which may also be expressed as: the first frame is used to indicate (or notify) that the at least one station device uses new MAC address information and new identifier information.

In some embodiments, the first frame is also called an identifier change indication frame, an AID change indication frame, or other similar names, which is not be repeated here.

In some embodiments, in a case where the first frame is sent based on a request of the station device, the first frame is also called an identifier change response frame, an AID change response frame, or the like, the present application is not limited thereto.

In some embodiments, a function of indicating changing the MAC address information and identifier information may be implemented by using an existing frame, for example, by using an existing management frame for indicating changing the MAC address information and identifier information. That is, the first frame may be the existing management frame. As an example, but not limitation, the existing management frame may include an action frame with acknowledgement, such as a public action frame, or an action frame without acknowledgement (Action No Ack frame).

In some embodiments, a new frame may be added to implement the function of indicating changing the MAC address information and identifier information. For example, the first frame may be a newly defined action frame with acknowledgement, such as a newly defined public action frame or a newly defined protected dual of public action frame, or may be a newly defined action frame without acknowledgement (Action No Ack frame).

In some embodiments, the first frame is used to indicate changing the MAC address information and identifier information of the station device, which may be determined according to a frame type. For example, the first frame belongs to a newly added frame type, which is dedicated to indicating changing the MAC address information and identifier information.

In some other embodiments, the first frame is used to indicate changing the MAC address information and identifier information of the station device, which may be determined according to information carried in the first frame. For example, in a case where the first frame is an existing management frame, it can be determined whether the management frame is used to indicate changing the MAC address information and identifier information of the station device based on whether the management frame carries relevant information of changing the MAC address and identifier information.

For example, in a case where the first frame carries explicit indication information indicating a request of changing the MAC address information and identifier information of the station device, the first frame is used to change the MAC address information and identifier information of the station device.

For another example, in a case where the first frame carries time information or derivation number information of changing the MAC address information and identifier information, the first frame is used to change the MAC address information and identifier information of the station device.

In some embodiments of the present application, the method 200 further includes:
sending, by a station device, a second frame to the access point device, the second frame being used to request the access point device to change the MAC address and identifier information of at least one station device, or the second frame being used to request the access point device to indicate (or notify) that the at least one station device changes the MAC address and identifier information.

In some embodiments, the station device may be one of the at least one station device.

In some embodiments, the second frame is also called an identifier change request frame, or an AID change request frame, or other similar names, which is not limited in the present application.

In some embodiments, a function of indicating a request of changing the MAC address information and identifier information may be implemented by using an existing frame, for example, by using an existing management frame to indicate the request of changing the MAC address information and identifier information. That is, the second frame may be the existing management frame. As an example, but not limitation, the existing management frame may include an action frame with acknowledgement, such as a public action frame, or an action frame without acknowledgement (Action No Ack frame).

In some embodiments, a new frame may be added to implement the function of indicating a request of changing the MAC address information and identifier information. For example, the second frame may be a newly defined action frame with acknowledgement, such as a newly defined public action frame or a newly defined protected dual of public action frame, or may be a newly defined action frame without acknowledgement (Action No Ack frame).

In some embodiments, the second frame is used to request changing the MAC address information and identifier information of the station device, which may be determined according to a frame type. For example, the second frame belongs to a newly added frame type, which is dedicated to requesting changing the MAC address information and identifier information.

In some other embodiments, the second frame is used to request changing the MAC address information and identifier information of the station device, which may be determined based on information carried in the second frame. For example, in a case where the second frame is an existing management frame, it can be determined whether the management frame is used to request changing the MAC address information and identifier information of the station device based on whether the management frame carries relevant information of requesting changing the MAC address and identifier information.

For example, if the second frame carries first indication information, and the first indication information is used for indicating a request of changing the MAC address information and identifier information of the station device, then the second frame is used to request changing the MAC address information and identifier information of the station device.

For another example, if a receiver address of the second frame is set to a new MAC address of the station device, it means that the second frame is used to request changing the MAC address information and identifier information of the station device.

For yet another example, if the second frame carries time information of changing the MAC address information and identifier information, it means that the second frame is used to request changing the MAC address information and identifier information of the station device.

In some embodiments, the second frame is used to request the access point device to indicate, in a multicast manner or a broadcast manner, changing the MAC address information and identifier information of the station device.

In some other embodiments, the second frame is used to request the access point device to indicate, in a unicast manner, changing the MAC address information and identifier information of the station device.

Optionally, the second frame may include explicit indication information used for indicating a manner in which the station device requests the access point device to initiate a change. For example, the indication information may be 1 bit, and different values of the 1 bit are used for indicating that the station device requests the access point device to initiate a change in the multicast manner or a change in the unicast manner. In a case where the 1 bit indicates that the station device requests the access point device to initiate a change in the multicast manner, the access point device may indicate that station devices in a multicast group to which the station device belongs change the MAC address information and identifier information. Alternatively, in a case where the 1 bit indicates that the station device requests the access point device to initiate a change in the unicast manner, the access point device may indicate that the station device changes the MAC address information and identifier information. For another example, the indication information may be 1 bit, and different values of the 1 bit are used for indicating that the station device requests the access point device to initiate a change in a multicast manner or a change in a broadcast manner. In a case where the 1 bit indicates that the station device requests the access point device to initiate a change in the multicast manner, the access point device may indicate that station devices in a multicast group to which the station device belongs change the MAC address information and identifier information. Alternatively, in a case where the 1 bit indicates that the station device requests the access point device to initiate a change in the broadcast manner, the access point device may indicate that all station devices that support changing the MAC address and identifier information change the MAC address and identifier information.

In some embodiments, the second frame includes time information of changing the MAC address information and identifier information by the station device, or in other words, includes time information of changing the MAC address information and identifier information expected by the station device.

That is, the station device, when requesting changing the MAC address information and identifier information, may also indicate the time information of changing the MAC address information and identifier information.

In some embodiments, the first frame includes time information indicated by the access point device to the station device for changing the MAC address information and identifier information. For example, in a case where the second frame does not include the time information of changing the MAC address information and identifier information, the first frame may indicate the time information of changing the MAC address information and identifier information; alternatively, in a case where the first frame includes the time information of changing the MAC address information and identifier information, the access point device may also re-determine change time information depending on a cache condition (including its own downlink traffic, and uplink traffic of each station device), and indicate the updated change time information in the first frame.

In some embodiments, changing the MAC address and identifier information in a broadcast manner may refer to that all station devices that support changing the MAC address and identifier information change the MAC address and identifier information.

In some embodiments, changing the MAC address and identifier information in a broadcast manner may refer to that all station devices that support changing the MAC address and identifier information in one or more multicast groups change the MAC address and identifier information.

In some embodiments, changing the MAC address and identifier information in a multicast manner may refer to that all station devices that support changing the MAC address and identifier information in a multicast group change the MAC address and identifier information.

In some embodiments, changing the MAC address and identifier information in a unicast manner may refer to that a station device of unicast changes the MAC address and identifier information.

In conjunction with specific embodiments, manners of sending the first frame will be described as follows.

Manner 1: the first frame may be sent in a broadcast manner.

Optionally, in Manner 1, the first frame may be a broadcast frame, such as a beacon frame or a millimeter wave device beacon frame (DMG Beacon), or may be another management frame.

Optionally, in Manner 1, a station device that receives the broadcast frame may change a MAC address and AID information according to the broadcast frame in a case where a function of changing the MAC address and AID is supported by the station device.

Optionally, in Manner 1, the access point device may set a receiver address of the first frame to be a broadcast address.

Optionally, in Manner 1, the first frame is used to notify all station devices that support the function of changing the MAC address and AID to change the MAC address and AID information, or in other words, to use a new MAC address and new AID information.

Optionally, in Manner 1, the at least one station device may include all station devices that support the function of changing the MAC address and AID.

Optionally, in Manner 1, the first frame is used to notify station devices in one or more multicast groups to change the MAC address and AID information, or in other words, to use a new MAC address and new AID information. The one or more multicast groups may be indicated in a frame body of the first frame.

That is, the at least one station device may include the station devices in the one or more multicast groups. Each multicast group includes one or more station devices.

Correspondingly, all station devices in the one or more multicast groups will receive the broadcast frame, and further, in a case where a function of changing the MAC address and AID is supported by the station devices, change the MAC address and AID information according to the broadcast frame.

Optionally, in Manner 1, change information of the MAC address information and identifier information may belong to a critical update. For example, a check beacon field in a beacon frame is incremented and remainder of modulo 256 is calculated.

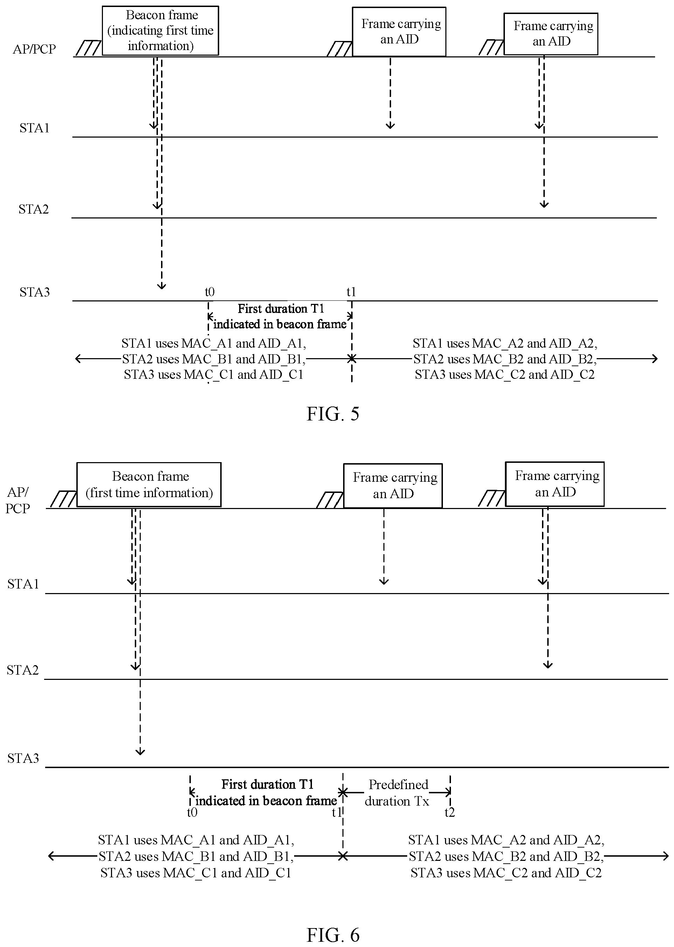

FIGS. 5 and 6 are schematic interaction diagrams showing that an access point device indicates changing MAC address information and identifier information in a broadcast manner. Difference between FIGS. 5 and 6 is that methods of determining the change time of the MAC address information and identifier information are different. Specific determination methods will be described in the following embodiments. The two determination methods of FIGS. 5 and 6 are both applicable to Manner 1, and are also applicable to Manner 2 and Manner 3 in below.

Specifically, as shown in FIG. 5 or 6, the access point device sends a beacon frame in which change time information is indicated; and STA1, STA2 and STA3 receive the beacon frame at moment t0, determine a change time of the MAC address information and identifier information according to the change time information indicated in the beacon frame, and then after the change time, use new MAC address information and new identifier information for frame interaction.

Manner 2: the first frame may be sent in a multicast manner.

Optionally, in Manner 2, the first frame may be a multicast frame.

Optionally, in Manner 2, an access point device may set a receiver address of the first frame to be a multicast address (multicast-group address). The multicast address corresponds to a multicast group, and the multicast group includes one or more station devices.

Optionally, in Manner 2, the first frame is used to notify all station devices in a multicast group to change a MAC address and AID information, or in other words, to use a new MAC address and new AID information.

That is, the at least one station device may include station device(s) in a multicast group.

Correspondingly, all station devices in the multicast group will receive the multicast frame, and further, in a case where a function of changing the MAC address and AID is supported by the station devices, change the MAC address and AID information according to the multicast frame.

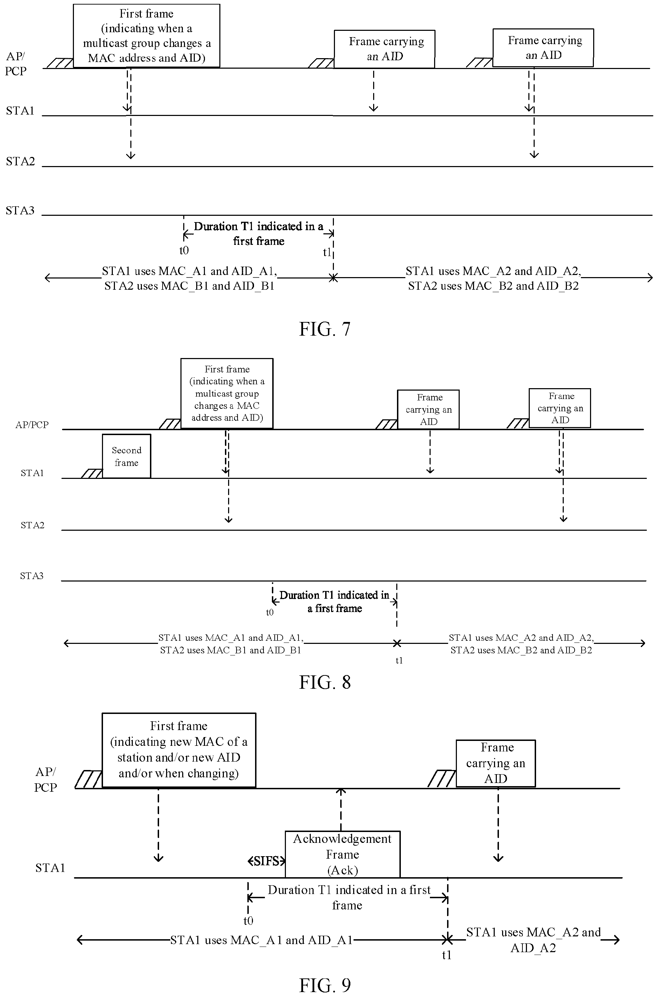

FIG. 7 is a schematic interaction diagram showing that an access point device indicates changing MAC address information and identifier information in a multicast manner.

FIG. 8 is a schematic interaction diagram showing that an access point device initiates changing a MAC address and identifier information based on a request (i.e., a second frame) of a station device. In this example, STA1 and STA2 belong to one multicast group.

Specifically, as shown in FIG. 7, the access point device sends a first frame in which change time information is indicated. A receiver address of the first frame is a multicast address of a multicast group corresponding to STA1 and STA2. STA1 and STA2 receive the first frame at moment t0, determine a change time of the MAC address information and identifier information according to the change time information indicated in the first frame, and then after the change time, use new MAC address information and new identifier information for data transmission.

Specifically, as shown in FIG. 8, STA1 sends the second frame to request changing MAC address information and identifier information of the station device in a multicast group, and the access point device sends the first frame to indicate changing the MAC address information and identifier information of the station device in the multicast group to which STA1 belongs, and indicates change time information in the first frame. STA1 and STA2 receive the first frame at moment t0, determine a change time of the MAC address information and identifier information according to the change time information indicated in the first frame, and then after the change time, use new MAC address information and new identifier information for frame interaction.

Manner 3: The first frame may be sent in a unicast manner.

Optionally, in Manner 3, the first frame may be a unicast frame, such as a ready to send (RTS) frame.

Optionally, in Manner 3, an access point device may set a receiver address of the first frame to be a unicast address (individual address, or directed address, or unicast address), and the unicast address corresponds to one station device.

That is, the at least one station device may include one station device.

Optionally, in Manner 3, the first frame is used to notify the one station device to change a MAC address and AID information, or in other words, to use a new MAC address and new AID information.

Correspondingly, a station device corresponding to the unicast address will receive the unicast frame, and further, in a case where a function of changing the MAC address and AID is supported by the station device, change the MAC address and AID information.

Optionally, in Manner 3, the first frame is further used to indicate MAC address information after changed and/or identifier information after changed of the one station device.

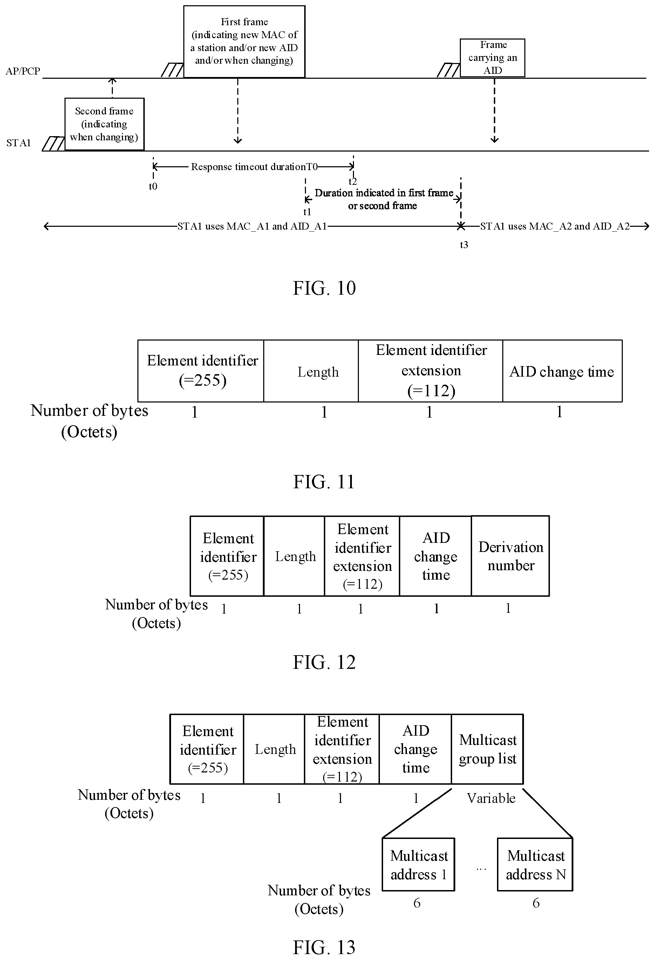

FIGS. 9 and 10 are schematic interaction diagrams showing that an access point device indicates changing MAC address information and identifier information in a unicast manner. Difference between FIGS. 9 and 10 is that: FIG. 9 shows that the access point device autonomously initiates changing the MAC address and identifier information, while FIG. 10 shows that the access point device initiates changing the MAC address and identifier information based on a request (i.e., a second frame) of a station device.

Specifically, as shown in FIG. 9, the access point device sends the first frame to STA1; and STA1 receives the first frame at moment t0, determines a change time of the MAC address information and identifier information according to change time information indicated in the first frame, and then after the change time, uses a new MAC address information and new identifier information for data transmission.

Optionally, the first frame may further include new MAC address information and/or AID information after changed of STA1. In this case, after the change time, STA1 may perform frame interaction based on the new MAC address information and/or the AID information after changed.

Specifically, as shown in FIG. 10, STA1 sends a second frame to request changing the MAC address information and identifier information of STA1. Optionally, the second frame notifies STA1 of time information of using new MAC address information and new AID information, for example, at moment T1.

The AP needs to send the first frame within a predefined timeout duration T0 (i.e., before moment t2), to indicate at least one of MAC address information after changed, identifier information after changed and a change time (i.e., updated T1) of STA1.

After receiving the first frame, STA1 determines the change time of the MAC address information and identifier information according to the change time information indicated in the first frame or the second frame, and then after the change time, uses the new MAC address information and new identifier information for data transmission.

For example, in a case where the first frame does not include the change time information, the change time of the MAC address information and identifier information is determined according to the change time information indicated in the second frame.

For another example, in a case where the first frame includes the change time information, the change time of the MAC address information and identifier information is determined according to the change time information indicated in the first frame.

In some embodiments of the present application, the first frame may further carry relevant information for determining the change time of the MAC address information and identifier information of the at least one station device, and/or the MAC address information after changed and identifier information after changed of the at least one station device, which is not limited in the present application.

In some embodiments, the first frame is further used to indicate time information of changing the MAC address information and identifier information of the at least one station device.

Optionally, in a case where the first frame does not indicate the time information of changing the MAC address information and identifier information, the at least one station device may determine the change time of the MAC address information and identifier information according to a predefined duration.

For example, a moment at which there is a time interval of a predefined duration starting from the moment when the first frame is received is taken as the change time of the MAC address information and identifier information. Correspondingly, the access point device takes a moment at which there is a time interval of the predefined duration starting from the moment when the first frame is sent as the change time of the MAC address information and identifier information. That is, the station device and the access point device have the same understanding of the change time of the MAC address information and identifier information.

In some embodiments, the first frame includes first time information, and the first time information is used for determining the change time of the MAC address information and identifier information of the at least one station device, or in other words, the at least one station device may determine a time when new MAC address information and new identifier information are generated and used based on the first occasion information.

Correspondingly, the access point device may also determine the change time of the MAC address information and identifier information of the at least one station device according to the first time information. That is, the station device and the access point device have the same understanding of the change time of the MAC address information and identifier information.

Optionally, the first time information may be relative time information, such as a time interval relative to a moment when the first frame is transmitted or received, or may be absolute time information, such as a specific moment when the MAC address information and identifier information are changed.

In some embodiments, the first time information is used to indicate a first duration, and the change time of the MAC address information and identifier information of the at least one station device is at a first moment, where the first moment is later than a moment when the at least one station device receives the first frame, and there is an interval of the first duration.

That is, the at least one station device changes the MAC address information and identifier information after the first duration from the moment when the first frame is received by the at least one station device, or uses new MAC address information and new identifier information of the at least one station device after the first duration from the moment when the first frame is received by the at least one station device.

Correspondingly, the access point device changes the MAC address information and identifier information of the at least one station device after the first duration from the moment when the first frame is sent by the access point device, or uses the new MAC address information and identifier information of the at least one station device after the first duration from the moment when the first frame is sent by the access point device.

In some embodiments, the access point device needs to process cached frames to be sent within a time period (e.g., a first duration) from sending the first frame to changing the MAC address information and identifier information of the at least one station device.

For example, before changing the MAC address information and identifier information, old MAC address information and old identifier information are used to send frames; and after the MAC address information and the identifier information are changed, the new MAC address information and new identifier information are used to send frames.

Optionally, if after the MAC address information and identifier information are changed, there is a frame carrying the old MAC address information and old identifier information that has been generated but not sent, or a frame indicating successful sending has not been received (for example, an acknowledgement frame or a response frame has not been received), the access point device may discard these frames and may not retransmit these frames.

In some embodiments, the station device also needs to perform similar processing on cached frames to be sent within a time period (e.g., the first duration) from receiving the first frame to changing the MAC address information and identifier information of the station device, which is not repeated here.

Taking the above-mentioned Manner 1 as an example, but also applicable to Manner 2 and Manner 3, as shown in FIG. 5, the access point device selects an appropriate time to notify all station devices of the first time information of changing the MAC address and identifier information according to the cache situation (including its own downlink traffic and uplink traffic of each station device), to indicate the first duration T1, so that cached data can be fully sent before MAC address after changed and identifier information after changed take effect.

For example, as shown in FIG. 5, an AP sends a beacon frame, STA1, STA2 and STA3 receive the beacon frame at moment t0, and the beacon frame indicates a first duration T1. A MAC address currently used by STA1 is MAC_A1, and an AID currently used by STA1 is AID_A1; a MAC address currently used by STA2 is MAC_B1, and an AID currently used by STA2 is AID_B1; and a MAC address currently used by STA3 is MAC_C1, and an AID currently used is AID_C1.

A moment of the first duration T1 after the moment t0 is a moment t1. After the moment t1, STA1 uses a new MAC address (e.g., MAC_A2) and uses a new AID (e.g., AID_A2), STA2 uses a new MAC address (e.g., MAC_B2) and uses a new AID (e.g., AID_B2), STA3 uses a new MAC address (e.g., MAC_C2) and uses a new AID (e.g., AID_C2).

In some embodiments, before the moment t1, if a transmitter (which may be an access point device or a station device) does not receive a frame indicating successful sending (for example, does not receive an acknowledgement frame or a response frame), after the moment t1, the transmitter may discard this frame to be sent and no longer retransmit this frame.

In some other embodiments, the change time of the MAC address information and identifier information of the at least one station device is determined according to the first time information and predefined duration information (or referred to as transition duration information, which is denoted as Tx). For example, the station device changes the MAC address information and the identifier information after the first duration and the predefined duration from a moment when the first frame is received by the station device.

Taking the above-mentioned Manner 1 as an example, but also applicable to Manner 2 and Manner 3, as shown in FIG. 6, difference from FIG. 5 is that, in these embodiments, a transition duration Tx is predefined. A moment of the first duration T1 after the moment t0 is a moment t1, and a moment of T1 plus Tx (T1+Tx) after the moment t0 is a moment t2. In some cases, before moment t1, the access point device may have cached frames that need to be sent to STA1, in which MAC_A1 and AID_AI are used. During the transition duration Tx after moment t1 (i.e., before the moment t2), frames sent by the access point device to STA1 may include a frame using MAC_A1 and AID_AI, may also include a frame using MAC_A2 and AID_A2. Before the moment t2, STA1 needs to be able to process the coexistence of the above two types of frames. After the moment t2, STA1 will discard any frame using MAC_A1 and AID_AI from the access point device.

In some embodiments of the present application, the first frame includes derivation number information, and the derivation number information represents a number of derivations performed by the at least one station device to determine MAC address information after changed and identifier information after changed, which is applicable to Manner 1, Manner 2 and Manner 3.

In some cases, in a case that MAC address information and/or identifier information of a station device is obtained by derivation method, there may be a conflict between new MAC address information and/or new AID information of the station device and MAC address information and/or identifier information used by other station devices. In this case, the station device and the access point device may perform multiple derivations until there is no conflict.

In some embodiments, the access point device and the station device may use a consistent derivation method to derive new MAC address information and new identifier information. In a case where the access point device and the station device derive the new MAC address information and new identifier information of the station device by using the same number of derivations, obtained new MAC address information is the same and obtained new identifier information is also same. In other words, the access point device or the station device may determine the number of derivations used to derive the new MAC address information based on the new MAC address information.

In some embodiments, the access point device may also implicitly indicate the number of derivations performed to determine the new MAC address information and new identifier information to the station device.

For example, the access point device may send a unicast frame (such as an RTS frame) to the station device, and a receiver address of the unicast frame uses a new MAC address of the station device, so that the station device may determine the number of derivations performed by the access point device to obtain the new MAC address information of the station device based on the new MAC address, and further determine the new AID information by using the number of derivations. Alternatively, in a case where the MAC address information and the AID information have a corresponding relationship, the station device may also determine the new AID information based on the corresponding relationship.

In some other embodiments, the station device may also implicitly indicate the number of derivations performed to determine MAC address information after changed and identifier information after changed to the access point device.

For example, the station device may send a unicast frame (such as an RTS frame or a power-save poll (PS-Poll) frame) to the access point device, and a receiver address of the unicast frame uses a new MAC address of the station device, so that the access point device may determine the number of derivations performed by the station device to derive new MAC address information based on the new MAC address, and further determine the new AID information by using the number of derivations. Alternatively, in a case where the MAC address information and the AID information have a corresponding relationship, the access point device may also determine the new AID information of the station device based on the corresponding relationship.

It will be noted that in the embodiments of the present application, the MAC address information and identifier information of at least one station device may correspond to a same change time. For example, the first frame may carry only one piece of change time information, which is applicable to all station devices. Alternatively, the access point device may also configure the change time based on multicast group granularity. In this way, the first frame may carry one or more pieces of change time information respectively corresponding to one or more multicast groups. Alternatively, the change time may be configured based on station device granularity. In this way, the first frame may carry one or more pieces of change time information respectively corresponding to one or more station devices. The present application does not specifically limit configuration methods of the change time information.

It should further be noted that the MAC address information and identifier information of the at least one station device may correspond to a same number of derivations. For example, the first frame may carry only one piece of derivation number information, which is applicable to all station devices. Alternatively, the number of derivations may be configured based on the multicast group granularity. In this way, the first frame may carry one or more pieces of derivation number information respectively corresponding to one or more multicast groups. Alternatively, the number of derivations may be configured based on the station device granularity. In this way, the first frame may carry one or more pieces of derivation number information respectively corresponding to one or more station devices. The present application does not specifically limit configuration methods of the derivation number information.

Frame structure design of the first frame is described below in conjunction with FIGS. 11 to 21.

It can be understood that the position, size, etc., of each field in the frame structure illustrated in FIGS. 11 to 21 are only examples, which may be adjusted depending on actual requirements or the size of information carried by the field, the present application is not limited thereto.

Embodiment 1: all station devices correspond to same change information of MAC address information and identifier information, such as change time information and derivation number information.

In some embodiments, the first frame includes an identifier change element (or referred to as an AID change element), and the identifier change element is used for carrying the change information of the MAC address information and identifier information, such as the change time information, the derivation number information.

That is, in Embodiment 1, the change information of the MAC address information and identifier information of all station devices is carried by the above single element.

The design of the frame format in Embodiment 1 may be applicable to the aforementioned Manner 1, Manner 2 and Manner 3.

As an example, as shown in FIG. 11, the identifier change element may include an identifier change time (or referred to as AID change time) field, which is used for indicating time information of changing MAC address information and identifier information, for example, carrying the aforementioned first time information.

Optionally, in each embodiment shown in FIGS. 5 to 10, the first frame may use the design of the frame format shown in FIG. 11.

As an example, as shown in FIG. 12, the identifier change element may include an identifier change time (or referred to as AID change time) field and a derivation number field, where the identifier change time field is used for indicating time information of changing MAC address information and identifier information (for example, carrying the aforementioned first time information), and the derivation number field is used for indicating a number of derivations performed to derive MAC address information after changed and identifier information after changed.

Optionally, in each embodiment shown in FIGS. 5 to 10, the first frame may use the design of the frame format shown in FIG. 12.

In some embodiments, the identifier change element may be a newly added extension element, for example, its element identifier value is 255, and its element identifier extension value is a reserved value, such as 112, which is not limited in the present application.

Therefore, in Embodiment 1, the first frame may carry a piece of time information and/or derivation number information, and the time information and/or derivation number information may be applicable to all station devices corresponding to a receiver address of the first frame.

For example, in a case where the receiver address of the first frame is a broadcast address, the time information and/or derivation number information may be applicable to all station devices that support changing MAC address information and identifier information.

For another example, in a case where the receiver address of the first frame is a multicast address, the time information and/or derivation number information may be applicable to station devices in a multicast group corresponding to the multicast address, or in other words, to all station devices in the multicast group corresponding to the multicast address that support changing MAC address information and identifier information.

For yet another example, in a case where the receiver address of the first frame is a unicast address, the time information and/or the derivation number information may be applicable to a station device corresponding to the unicast address.

Embodiment 2: change information of MAC address information and identifier information is indicated according to a multicast group, such as change time information and derivation number information.

The design of the frame format in Embodiment 2 may be applicable to the aforementioned Manner 1 and Manner 2.

Embodiment 2-1: change information corresponding to all multicast groups is carried in a same element.

In some embodiments, the first frame includes an identifier change element, and the identifier change element is used for indicating change information corresponding to MAC address information and identifier information of station devices in one or more multicast groups.

As an example, as shown in FIG. 13, the identifier change element includes an identifier change time (or referred to as AID change time) field and a multicast group list field, where the multicast group list field includes at least one multicast address field (e.g., multicast address 1 to multicast address N, where N is a positive integer), the identifier change time field is used for indicating time information of changing MAC address information and identifier information (e.g., the aforementioned first time information), and the multicast address field is used for indicating a multicast group whose MAC address information and identifier information are to be changed.

In the example shown in FIG. 13, station devices in all multicast groups indicated by the identifier change element correspond to the same change time information, that is, the station devices each use the change time information indicated by the identifier change time field.

In the example shown in FIG. 13, the identifier change element may be a newly added extension element, for example, its element identifier value is 255, and its element identifier extension value is a reserved value, such as 112, which is not limited in the present application

Optionally, in FIG. 13, the identifier change element may further include a derivation number field for indicating a number of derivations performed to derive MAC address information after changed and identifier information after changed. The station devices in all multicast groups indicated by the identifier change element correspond to the same derivation number information.

In some embodiments, the identifier change element includes a multicast group information list field, the multicast group information list field includes at least one multicast group information field, and each multicast group information field is used for indicating information of changing MAC address information and identifier information of a station device in a corresponding multicast group. In these embodiments, change time information and/or derivation number information corresponding to each multicast group may be the same, or may be different.

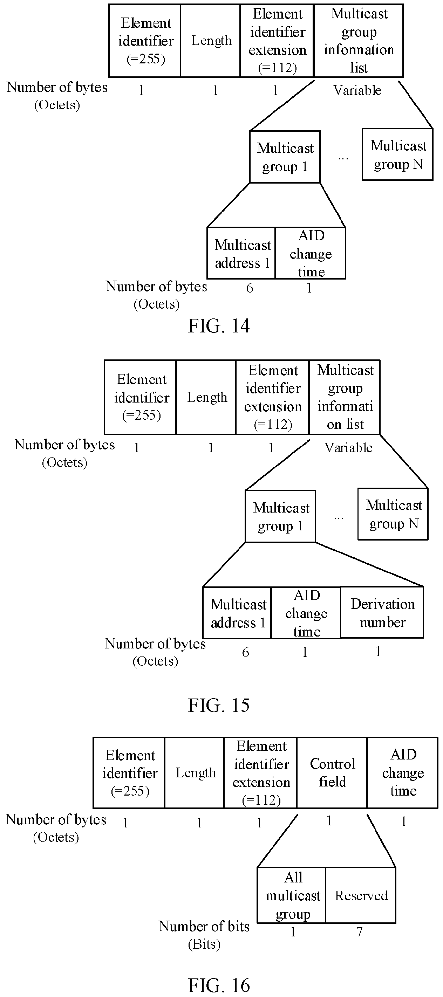

As an example, as shown in FIG. 14, each multicast group information field includes a multicast address field and an identifier change time field, where the multicast address field is used for indicating a multicast group whose MAC address information and identifier information are to be changed, and the identifier change time field is used for indicating time information of changing MAC address information and identifier information. In this example, the change time information indicated by the identifier change time field is only applicable to the multicast group indicated by the multicast address field.

In the example shown in FIG. 14, the identifier change element may be a newly added extension element, for example, its element identifier value is 255, and its element identifier extension value is a reserved value, such as 112, which is not limited in the present application.

As another example, as shown in FIG. 15, each multicast group information field includes a multicast address field, an identifier change time field, and derivation number information, where the multicast address field is used for indicating a multicast group of a corresponding multicast group of which MAC address information and identifier information are to be changed, the identifier change time field is used for indicating time information of changing MAC address information and identifier information of a station device in a corresponding multicast group, and the derivation number field is used for indicating a number of derivations performed by a station device in a corresponding multicast group to derive new MAC address information and new identifier information. In this example, the change time information indicated by the identifier change time field and the derivation number information indicated by the derivation number field are only applicable to the multicast group indicated by the multicast address field.

In the example shown in FIG. 15, the identifier change element may be a newly added extension element, for example, its element identifier value is 255, and its element identifier extension value is a reserved value, such as 112, which is not limited in the present application.

In yet other embodiments, as shown in FIG. 16, the identifier change element includes a control field and an identifier change time (or referred to as AID change time) field, where the control field is used for indicating that station devices in all multicast groups change MAC address information and identifier information, or all station devices that support changing MAC address information and identifier information change MAC address information and identifier information; and the identifier change time field is used for indicating time information of changing MAC address information and identifier information.

As an example, the control field may include an indication bit for indicating whether all multicast groups are applicable, or in other words, whether the change time information indicated by the identifier change time field is applied to all multicast groups.

For example, the indication bit is set to 1 for indicating all multicast groups; and the indication bit is set to 0 for indicating all station devices that support the function of changing the MAC address and AID (equivalent to the aforementioned Manner 1).

For another example, the indication bit is set to 0, which indicates all multicast groups; the indication bit is set to 1, which indicates all station devices that support the function of changing MAC address and AID (equivalent to the aforementioned Manner 1).

Optionally, in a case where the control field indicates all multicast groups, the change time information indicated by the identifier change time field is applicable to all multicast groups. Here, the all multicast groups may be all multicast groups that have received the first frame in a basic service set (BSS) on which the access point device is located.

Optionally, in a case where the control field indicates a station device that supports the function of changing MAC address and AID, the change time information indicated by the identifier change time field is applicable to all station devices that support the function of changing MAC address and AID.

In the example shown in FIG. 16, the identifier change element may be a newly added extension element, for example, its element identifier value is 255, and its element identifier extension value is a reserved value, such as 112, which is not limited in the present application.

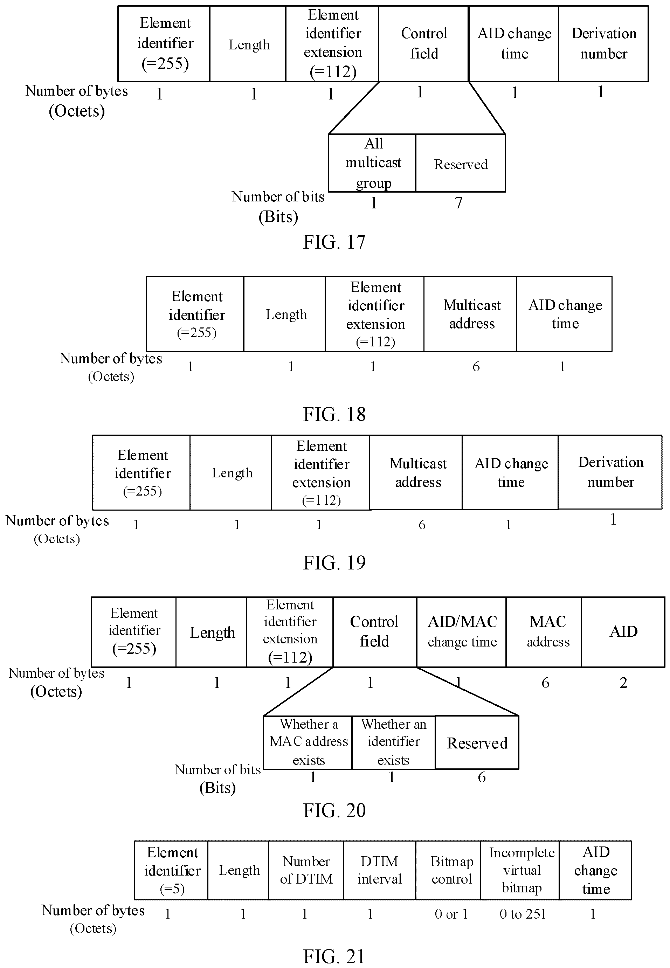

In yet other embodiments, as shown in FIG. 17, the identifier change element includes a control field, an identifier change time (or referred to as AID change time) field, and a derivation number field, where the control field is used for indicating that station devices in all the multicast group change MAC address information and identifier information, or all station devices that support changing MAC address information and identifier information change MAC address information and identifier information; the identifier change time field is used for indicating time information of changing MAC address information and identifier information; and the derivation number field is used for indicating a number of derivations performed by a station device to derive MAC address information after changed and identifier information after changed.

As an example, the control field may include an indication bit for indicating whether all multicast groups are applicable, or in other words, whether the change time information indicated by the identifier change time field and the number of derivations indicated by the derivation number field are applicable to all multicast groups.

For example, the indication bit is set to 1, which indicates all multicast groups and the indication bit is set to 0, which indicates all station devices that support the function of changing MAC address and AID (equivalent to the aforementioned Manner 1).

For another example, the indication bit is set to 0, which indicates all multicast groups; and the indication bit is set to 1, which indicates all station devices that support the function of changing MAC address and AID (equivalent to the aforementioned Manner 1).

Optionally, in a case where the control field indicates all multicast groups, the change time information indicated by the identifier change time field is applicable to all multicast groups, and the number of derivations indicated by the derivation number field is applicable to all multicast groups. Here, the all multicast groups may be all multicast groups that have received the first frame in a BSS on which the access point device is located.

Optionally, in a case where the control field indicates a station device that supports the function of changing MAC address and AID, the change time information indicated by the identifier change time field is applicable to all station devices that support the function of changing MAC address and AID, and the number of derivations indicated by the derivation number field is applicable to all station devices that support the function of changing MAC address and AID.

In the example shown in FIG. 17, the identifier change element may be a newly added extension element, for example, its element identifier value is 255, and its element identifier extension value is a reserved value, such as 112, which is not limited in the present application.

It can be understood that in the embodiments of the present application, in a case where clear scope is not limited, all station devices that support the function of changing MAC address and AID may refer to all station devices that support the function of changing MAC address and AID in the BSS on which the access point device is located.

Embodiment 2-2: change information corresponding to each multicast group is carried in one element, and pieces of change information corresponding to different multicast groups are carried in different elements.

In some embodiments, the first frame includes at least one identifier change element, each identifier change element corresponds to a multicast group, and each identifier change element is used for indicating change information corresponding to MAC address information and identifier information of a station device in the multicast group.

As an example, as shown in FIG. 18, each identifier change element includes a multicast address field and an identifier change time (or referred to as AID change time) field, where the multicast address field is used for indicating a multicast group whose MAC address information and identifier information are to be changed, and the identifier change time field is used for indicating time information of changing MAC address information and identifier information by a corresponding multicast group.

In the example shown in FIG. 18, the identifier change element may be a newly added extension element, for example, its element identifier value is 255, and its element identifier extension value is a reserved value, such as 112, which is not limited in the present application.

As another example, as shown in FIG. 19, each identifier change element includes a multicast address field, an identifier change time (or referred to as AID change time) field, and derivation number information. The multicast address field is used for indicating a multicast group whose MAC address information and identifier information are to be changed, the identifier change time field is used for indicating time information of changing MAC address information and identifier information by a corresponding multicast group, and the derivation number field is used for indicating a number of derivations performed by a station device in a corresponding multicast group to derive MAC address information after changed and identifier information after changed.

In the example shown in FIG. 19, the identifier change element may be a newly added extension element, for example, its element identifier value is 255, and its element identifier extension value is a reserved value, such as 112, which is not limited in the present application.

Optionally, in each embodiment shown in FIGS. 5 to 8, the first frame may use any design of frame formats shown in FIGS. 13 to 19.

Embodiment 3: change information of MAC address information and identifier information is indicated according to a station device, such as change time information and derivation number information.

The design of frame format in Embodiment 3 may be applicable to the aforementioned Manner 3.

Optionally, in the aforementioned Manner 3, the access point device may further indicate MAC address information after changed and/or identifier information after changed. In this case, the access point device may not need for indicating the derivation number information.

In some embodiments, the first frame includes an identifier change element, and the identifier change element is used for indicating information of changing MAC address information and identifier information by a station device.

As an example, as shown in FIG. 20, the identifier change element includes at least one of the following fields:
an identifier change time (or referred to as AID change time) field, used for indicating time information of changing the MAC address information and identifier information by the station device;
a MAC address field used, for indicating MAC address information after changed of the station device; and
an identifier field (or referred to as AID field), used for indicating identifier information after changed of the station device.

In some embodiments, as shown in FIG. 20, the identifier change element further includes a control field, and the control field includes at least one of the following fields:
a field of whether a MAC address exists used for indicating whether the identifier change element includes a MAC address field; and
a field of whether an identifier exists, used for indicating whether the identifier change element includes an identifier field.

In the example shown in FIG. 20, the identifier change element may be a newly added extension element, for example, its element identifier value is 255, and its element identifier extension value is a reserved value, such as 112, which is not limited in the present application.

It can be understood that in the above examples, the identifier change element may not carry the identifier change time field. In this case, the station device and the access point device may determine the change time of MAC address information and identifier information according to a preset rule (e.g., a predefined duration). Alternatively, in a case where the identifier change element does not carry the derivation number field, the station device and the access point device may generate a new MAC address and new identifier information according to a predefined number of derivations, or determine the new MAC address and new identifier information based on a pre-allocated MAC address and identifier information, or determine a new MAC address and identifier information indicated by the access point device as a new MAC address and/or identifier information of the station device, the present application is not limited thereto.

It will be noted that in the embodiments of the present application, an extension element may be newly added for carrying the change information of the MAC address information and identifier information of the station device; alternatively, an existing element in a frame may be used for carrying the change information of the MAC address information and identifier information of the station device, for example, a reserved bit of the existing element may be used for carrying the change information of the MAC address information and identifier information of the station device.

For example, as shown in FIG. 21, in a case where the first frame is a beacon frame, a traffic indication map (TIM) element in the beacon frame may be used for carrying the change information of the MAC address information and identifier information of the station device.

For example, an identifier change time (or referred to as AID change time) field is newly added in the TIM element for indicating the time information of changing MAC address information and identifier information.

It can be understood that in this example, the identifier change time field may be a countdown number, and its unit may be, for example, a beacon frame interval (general default is 100 milliseconds, and a user may change this setting) or a short beacon frame interval. For example, a value of 5 means that starting from a current beacon frame, the access point device sends a new beacon frame after each beacon frame interval. Every time a beacon frame is sent, the value of the identifier change time field is reduced by 1 until the value of the identifier change time field becomes 0. Alternatively, the unit of the identifier change time field may also be a time unit (TU, each TU is 1,024 microseconds), for example, 1 represents 200 TU, 2 represents 400 TU, 3 represents 600 TU, and so on.

In some embodiments of the present application, the access point device may indicate a change of MAC address information and identifier information in one frame interaction.

In some other embodiments of the present application, the access point device may indicate a change of MAC address information and a change of identifier information respectively in different frame interactions.

In some embodiments of the present application, S210 includes:
sending, by the access point device, a third frame to the at least one station device, the third frame being used to indicate changing MAC address information of the at least one station device; and
sending, by the access point device, a fourth frame to the at least one station device, the fourth frame being used to indicate changing identifier information of the at least one station device.

That is, changes of the MAC address and identifier information are indicated by different frames.

It can be understood that the third frame and the fourth frame may also use the sending method of the first frame, specific implementations can refer to the relevant descriptions of Manner 1 to Manner 3 which will not be repeated here for the sake of brevity.

In some embodiments, the third frame includes second time information, and the second time information is used for determining a change time of the MAC address information of the at least one station device.

For example, the second time information is used for indicating a second duration, and the change time of the MAC address information of the at least one station device is at a second moment, where the second moment is later than a moment when the at least one station device receives the third frame, and there is an interval of the second duration. That is, after the second duration from the moment when the third frame is received, the station device changes the MAC address information of the station device, or in other words, uses new MAC address information. Correspondingly, after the second duration from the moment when the third frame is sent, the access point device changes the MAC address information of the station device, or in other words, uses new MAC address information.

In some embodiments, the fourth frame includes third time information, and the third time information is used for determining a change time of the identifier information of the at least one station device.

For example, the third time information is used for indicating a third duration, and the change time of the identifier information of the at least one station device is at a third moment, where the third moment is later than a moment when the at least one station device receives the fourth frame, and there is an interval of the third duration. That is, after the third duration from the moment when the fourth frame is received, the station device changes the identifier information of the station device, or in other words, uses new identifier information. Correspondingly, after the third duration from the moment when the fourth frame is sent, the access point device changes the identifier information of the station device, or in other words, uses new identifier information.

In some embodiments, the change time of the MAC address information determined according to the second time information is the same as the change time of the identifier information determined according to the third time information, for example, the second moment is the same as the third moment. That is, the new MAC address information and new identifier information of the station device take effect simultaneously.

It will be noted that a configuration method of the second time information may refer to the configuration method of the first time information, which will not be repeated here for the sake of brevity. For example, a same time for changing the MAC address information may be configured for all station devices, or the time for changing the MAC address information may be configured based on the multicast group, or the time for changing the MAC address information may be configured based on the station device.

Similarly, a configuration method of the third time information may also refer to the configuration method of the first time information, which will not be repeated here for the sake of brevity. For example, a same time for changing the identifier information may be configured for all station devices, or the time for changing the identifier information may be configured based on the multicast group, or the time for changing the identifier information may be configured based on the station device.

In some embodiments, the third frame may include first derivation number information, and the first derivation number information is used for indicating a number of derivations performed by the at least one station device to determine new MAC address information.

In some embodiments, the fourth frame may include second derivation number information, and the second derivation number information is used for indicating a number of derivations performed by the at least one station device to determine new identifier information.

In some embodiments, the first derivation number information and the second derivation number information may be the same, or may be different, as long as it can be ensured that the MAC address information obtained by derivation does not conflict with MAC address information currently used by other station devices, and the identifier information obtained by derivation does not conflict with identifier information currently used by other station devices.

It will be noted that a configuration method of the first derivation number information may refer to the configuration method of the derivation number information in the first frame, which will not be repeated here for the sake of brevity. For example, a same number of derivations for deriving MAC address information may be configured for all station devices, or the number of derivations for deriving MAC address information may be configured based on the multicast group, or the number of derivations for deriving MAC address information may be configured based on the station device.

Similarly, a configuration method of the second derivation number information may refer to the configuration method of the derivation number information in the first frame, which will not be repeated here for the sake of brevity. For example, a same number of derivations for deriving identifier information may be configured for all station devices, or the number of derivations for deriving identifier information may be configured based on the multicast group, or the number of derivations for deriving identifier information may be configured based on the station device.

In some embodiments, in a case where the third frame includes the second time information and/or the first derivation number information, the design of frame format of the third frame refers to the design of frame format of the first frame, which will not be repeated here. Difference is that the second time information and/or the first derivation number information is only applicable to a change of MAC address information.

In some embodiments, in a case where the fourth frame includes the third time information and/or second derivation number information, the design of frame format of the third frame refers to the design of frame format of the first frame, which will not be repeated here. Difference is that the third time information and/or second derivation number information is only applicable to a change of identifier information.

In the above embodiments, the access point device may explicitly indicate that the station device changes the MAC address information and identifier information. In some other embodiments, the access point device and/or the station device may also implicitly indicate changing the MAC address information and identifier information of the station device.

In some embodiments of the present application, S210 includes:
sending, by the access point device, a fifth frame to a station device, the fifth frame including MAC address information after changed of the station device, the fifth frame being used to indicate that the station device changes MAC address information and identifier information.

That is, the access point device implicitly indicates changing the MAC address information and identifier information to the station device by using new MAC address information of the station device.

Optionally, the fifth frame is a unicast frame. For example, the access point device may set a receiver address of the fifth frame to be a new MAC address of the station device.

In some embodiments, the station device that has received the fifth frame may determine, based on the new MAC address, that the station device needs to change the MAC address information and identifier information.

In some embodiments, the station device may determine a new AID of the station device based on the new MAC address of the station device. For example, the station device determines a number of derivations performed by the access point device to derive the new MAC address based on the new MAC address, and further determines new AID information based on the number of derivations. For another example, the station device determines the new AID information based on the new MAC address in conjunction with a corresponding relationship between the MAC address of the station device and the AID information of the station device. The corresponding relationship may be pre-allocated by the access point device, or may be obtained by derivation in advance according to a preset rule.

In some embodiments, upon receiving the fifth frame, the station device determines that the new MAC address and new AID information of the station device take effect.

In some other embodiments, after a predefined duration from a moment when the fifth frame is received, the station device determines that the new MAC address and new AID information take effect. The predefined duration is a duration negotiated or agreed upon by the access point device and the station device.

In some embodiments, the fifth frame is a ready to send (RTS) frame.

In some embodiments of the present application, S220 includes:
sending, by the station device, a sixth frame to the access point device, the sixth frame including MAC address information after changed of the station device, the sixth frame being used to indicate that the station device is to change the MAC address information and identifier information.

That is, the station device implicitly indicates changing the MAC address information and identifier information to the access point device by using new MAC address information of the station device.

Optionally, the sixth frame is a unicast frame. For example, the station device may set a transmitter address of the fifth frame to be a new MAC address of the station device, and set a receiver address to be the MAC address of the access point device.

In some embodiments, the access point device that has received the sixth frame may determine, based on the new MAC address, that the station device is to use new MAC address information and new identifier information.

In some embodiments, the access point device may determine a new AID of the station device based on the new MAC address of the station device. For example, the access point device determines a number of derivations performed by the station device to derive the new MAC address based on the new MAC address, and further determines new AID information based on the number of derivations. For another example, the access point device determines new AID information of the station device based on the new MAC address in conjunction with a corresponding relationship between the MAC address and AID information of the station device.

In some embodiments, upon receiving the sixth frame, the access point device determines that the new MAC address and new AID information of the station device take effect.

In some other embodiments, after a predefined duration from a moment when the sixth frame is received, the access point device determines that the new MAC address and new AID information take effect. The predefined duration is a duration negotiated or agreed upon by the access point device and the station device.

In some embodiments, the sixth frame includes a ready to send (RTS) frame and/or a power-save poll (PS-Poll) frame.

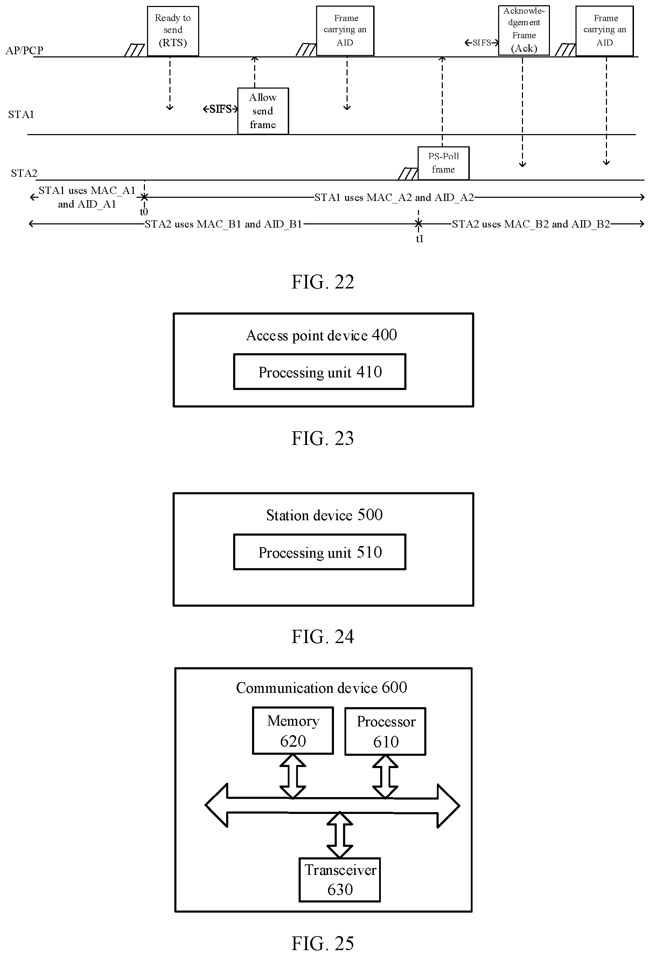

FIG. 22 is a schematic interaction diagram shown that an access point device and/or a station device implicitly initiate a change of MAC address and identifier information in a unicast manner.

In some scenarios, as shown in FIG. 22, before moment t0, a MAC address used by STA1 is MAC_A1, and an AID used by STA1 is AID_A1. The AP sends an RTS frame to STA1 at moment t0, and a receiver address of the RTS frame uses a new MAC address of STA1. STA1 may determine that the AP has changed its own MAC address based on the received RTS frame, so that STA1 may determine new AID information. Further, after moment t0, STA1 uses the new MAC address (e.g., MAC_A2) and new AID (e.g., AID_A2) for frame interaction.

In some other scenarios, as shown in FIG. 22, before moment t1, a MAC address used by STA2 is MAC_B1, and an AID used by STA2 is AID_B1. STA2 sends an RTS frame or a PS-Poll frame to the AP at moment t1, a transmitter address of the RTS frame or PS-Poll frame uses a new MAC address of STA2, such as MAC_B2. The AP can determine that STA2 has changed its own MAC address based on the received RTS frame or PS-Poll frame, so that the AP may determine new AID information. Further, after moment t1, STA1 uses the new MAC address (e.g., MAC_B2) and new AID (e.g., AID_B2) for data interaction.

Therefore, in the implementations of implicitly indicating changing MAC address information and identifier information, the access point device may not need to notify the station device to change the MAC address and AID information in advance. For example, when the station device receives a unicast frame using a new MAC address sent by the access point device, the new MAC address information and new AID information are enabled, or the new MAC address information and new AID information are enabled after a predefined duration. Alternatively, the station device may not need to request the access point device to change the MAC address and AID information for the station device in advance. When the access point device receives a unicast frame using a new MAC address sent by the station device, the new MAC address and new AID information are enabled by the station device.

In summary, in the embodiments of the present application, by simultaneously changing the MAC address information and identifier information of the station device, it is beneficial to reduce the problem of user privacy leakage caused by changing only one identifier.

In some embodiments, the access point device may initiate a change of the MAC address information and identifier information of the station device, such as initiate the change of the MAC address information and identifier information of the station device in a broadcast manner, in a multicast manner, or in a unicast manner. Alternatively, the access point device may also implicitly indicate a change of the MAC address information and identifier information. For example, the access point device may autonomously initiate the change of the MAC address information and identifier information of the station device. For another example, the access point device may initiate the change of the MAC address information and identifier information of the station device based on a request of the station device.

In some other embodiments, the station device may also initiate the change of the MAC address information and identifier information of the station device, such as request the access point device to indicate changing the MAC address information and identifier information of the station device in a broadcast manner, in a multicast manner, or in a unicast manner. Alternatively, the station device may also implicitly indicate the change of the MAC address information and identifier information.

Method embodiments of the present application are described in detail above in conjunction with

FIGS. 2 to 22, and device embodiments of the present application will be described in detail below in conjunction with FIGS. 23 to 27. It can be understood that the device embodiments are correspond to the method embodiments, and similar descriptions can refer to the method embodiments.

FIG. 23 is a schematic block diagram showing an access point device 400 in accrordance with the embodiments of the present application. As shown in FIG. 23, the access point device 400 includes:
a processing unit 410, configured to indicate that at least one station device changes media access address (MAC) address information and identifier information of the at least one station device.

In some embodiments, identifier information of a station device includes associated identifier (AID) information of the station device and/or unassociated identifier (UID) information of the station device.

In some embodiments, MAC address information after changed of the station device is pre-allocated by the access point device; and/or
identifier information after changed of the station device is pre-allocated by the access point device.

In some embodiments, the MAC address information after changed and identifier information after changed of the station device are determined by the access point device and the station device according to a preset rule.

In some embodiments, the MAC address information after changed of the station device is determined based on at least one of the following information:
MAC address information before changed of the station device, and identifier information before changed of the station device.

In some embodiments, the identifier information after changed of the station device is determined based on at least one of the following information:
MAC address information before changed of the station device, identifier information before changed of the station device, and the MAC address after changed of the station device.

In some embodiments, the access point device further includes:
a communication unit, configured to send a first frame to the at least one station device (for example, the processing unit controls the communication unit to send the first frame), where the first frame is used to indicate changing the MAC address information and identifier information of the at least one station device.

In some embodiments, the first frame includes first duration information, and the first duration information is used for determining a change time of the MAC address information and identifier information of the at least one station device.

In some embodiments, the first duration information is used for indicating a first duration, and the change time of the MAC address information and identifier information of the at least one station device is at a first moment, where the first moment is later than a moment when the at least one station device receives the first frame, and there is an interval of the first duration.

In some embodiments, the first frame includes derivation number information, and the derivation number information represents a number of derivations performed by the station device to determine MAC address information after changed and identifier information after changed.

In some embodiments, the first frame includes an identifier change element, and the identifier change element includes an identifier change time field used for indicating time information of changing MAC address information and identifier information; or
the identifier change element includes an identifier change time field and a derivation number field, where the identifier change time field is used for indicating time information of changing MAC address information and identifier information, and the derivation number field is used for indicating a number of derivations performed to derive MAC address information after changed and identifier information after changed.

In some embodiments, the first frame includes an identifier change element, and the identifier change element is used for indicating information of changing MAC address information and identifier information corresponding to one or more multicast groups.

In some embodiments, the identifier change element includes an identifier change time field and a multicast group list field, the multicast group list field includes at least one multicast address field, where the identifier change time field is used for indicating time information of changing MAC address information and identifier information, and the multicast address field is used for indicating a multicast group whose MAC address information and identifier information are to be changed.

In some embodiments, the identifier change element includes a multicast group information list field, the multicast group information list field includes at least one multicast group information field, and each multicast group information field is used for indicating information of changing MAC address information and identifier information of a station device in a corresponding multicast group.

In some embodiments, each multicast group information field includes a multicast address field and an identifier change time field, where the multicast address field is used for indicating a multicast group whose the MAC address information and identifier information are to be changed, and the identifier change time field is used for indicating time information of changing MAC address information and identifier information.

In some embodiments, each multicast group information field includes a multicast address field, an identifier change time field, and derivation number information, where the multicast address field is used for indicating a multicast group of a corresponding multicast group of which MAC address information and identifier information are to be changed, the identifier change time field is used for indicating time information of changing the MAC address information and identifier information by the corresponding multicast group, and the derivation number field is used for indicating a number of derivations performed by a station device in a corresponding multicast group to derive MAC address information after changed and identifier information after changed.

In some embodiments, the identifier change element includes a control field and an identifier change time field, where the control field is used for indicating that station devices in all multicast groups change MAC address information and identifier information, or all station devices that support changing MAC address information and identifier information change MAC address information and identifier information; and the identifier change time field is used for indicating time information of changing MAC address information and identifier information.

In some embodiments, the identifier change element includes a control field, an identifier change time field and a derivation number field, where the control field is used for indicating that station devices in all multicast groups change MAC address information and identifier information, or all station devices that support changing MAC address information and identifier information change MAC address information and identifier information; the identifier change time field is used for indicating time information of changing MAC address information and identifier information; and the derivation number field is used for indicating a number of derivations performed by a station device to derive MAC address information after changed and identifier information after changed.

In some embodiments, the first frame includes at least one identifier change element, each identifier change element corresponds to a multicast group, and each identifier change element is used for indicating information of changing MAC address information and identifier information corresponding to a multicast group.

In some embodiments, each identifier change element includes a multicast address field and an identifier change time field, the multicast address field is used for indicating a multicast group whose MAC address information and identifier information are to be changed, and the identifier change time field is used for indicating time information of changing MAC address information and identifier information by a corresponding multicast group.

In some embodiments, each identifier change element includes a multicast address field, an identifier change time field and derivation number information, where the multicast address field is used for indicating a multicast group whose MAC address information and identifier information are to be changed, the identifier change time field is used for indicating time information of changing MAC address information and identifier information by a corresponding multicast group, and the derivation number field is used for indicating a number of derivations performed by a station device in a corresponding multicast group to derive MAC address information after changed and identifier information after changed.

In some embodiments, the first frame includes a traffic indication map (TIM) element, and the TIM element includes an identifier change time field used for indicating time information of changing MAC address information and identifier information.

In some embodiments, the first frame is sent in a broadcast manner.

In some embodiments, the at least one station device includes all station devices that support changing MAC address information and identifier information.

In some embodiments, the at least one station device includes station device(s) in one or more multicast groups.

In some embodiments, characterized in that the first frame is sent in a multicast manner.

In some embodiments, the at least one station device includes a station device in a multicast group.

In some embodiments, the first frame is sent in a unicast manner.

In some embodiments, the first frame is further used to indicate MAC address information after changed and/or identifier information after changed of a station device.

In some embodiments, the first frame includes an identifier change element, and the identifier change element is used for indicating information of changing MAC address information and identifier information by a station device.

In some embodiments, the identifier change element includes at least one of the following fields:
an identifier change time field, used for indicating time information of changing the MAC address information and identifier information by the station device;
a MAC address field, used for indicating MAC address information after changed of the station device; and
an identifier field, used for indicating identifier information after changed of the station device.

In some embodiments, the identifier change element further includes a control field, and the control field includes at least one of the following fields:
a field of whether a MAC address exists, used for indicating whether the identifier change element includes the MAC address field; and
a field of whether an identifier exists used for indicating whether the identifier change element includes the identifier field.

In some embodiments, the first frame is a management frame.

In some embodiments, the first frame is autonomously sent by the access point device.

In some embodiments, the first frame is sent by the access point device based on a request of a station device.

In some embodiments, the access point device further includes:
a communication unit, configured to receive a second frame from the station device, where the second frame is used to request the access point device to change the MAC address information and identifier information of the at least one station device.

In some embodiments, a frame type of the second frame is used to indicate that the second frame is used to request changing the MAC address information and identifier information of the station device; or the second frame includes first indication information, where the first indication information is used for requesting changing the MAC address information and identifier information of the station device.

In some embodiments, the second frame is used to request the access point device to change the MAC address information and identifier information of the station device in a multicast manner or a broadcast manner.

In some embodiments, the second frame is used to request the access point device to change the MAC address information and identifier information of the station device in a unicast manner.

In some embodiments, the second frame includes time information of changing MAC address information and identifier information by the station device.

In some embodiments, the first frame includes time information indicated by the access point device to the station device for changing the MAC address information and identifier information.

In some embodiments, the access point device further includes:
a communication unit, configured to send a third frame to the at least one station device (for example, the processing unit controls the communication unit to send the third frame), where the third frame is used to indicate changing MAC address information of the at least one station device, and configured to send a fourth frame to the at least one station device (for example, the processing unit controls the communication unit to send the fourth frame), where the fourth frame is used to indicate changing the identifier information of the at least one station device.

In some embodiments, the third frame includes second duration information, and the second duration information is used for determining a change time of the MAC address information of the at least one station device; and
the fourth frame includes third duration information, and the third duration information is used for determining a change time of the identifier information of the at least one station device.

In some embodiments, the second duration information is used for indicating a second duration, and the change time of the MAC address information of the at least one station device is at a second moment, where the second moment is later than a moment when the at least one station device receives the third frame, and there is an interval of the second duration; and
the third duration information is used for indicating a third duration, and the change time of the identifier information of the at least one station device is at a third moment, where the third moment is later than a moment when the at least one station device receives the fourth frame, and there is an interval of the third duration.

In some embodiments, the second moment is the same as the third moment.

In some embodiments, the access point device further includes:
a communication unit, configured to send a fifth frame to the station device, where the fifth frame includes MAC address information after changed of the station device, and the fifth frame is used to indicate that the station device changes MAC address information and identifier information.

In some embodiments, the fifth frame is a ready to send (RTS) frame.

In some embodiments, in some embodiments, the access point device further includes:
a communication unit, configured to exchange identifier change capability information with a station device, where the identifier change capability information is used for indicating whether changing MAC address information and/or identifier information is supported.

In some embodiments, the identifier change capability information includes second indication information and third indication information, the second indication information is used for indicating whether changing MAC address information is supported, and the third indication information is used for indicating whether changing identifier information is supported.

In some embodiments, the identifier change capability information includes fourth indication information, and the fourth indication information is used for indicating whether changing MAC address information and identifier information is supported.

In some embodiments, the identifier change capability information is carried in an Extended Capabilities element and/or a privacy protection capability element, where the privacy protection capability element is used for carrying privacy protection capability information.

Optionally, in some embodiments, the communication unit may be a communication interface or a transceiver, or an input/output interface of a communication chip or a system on chip. The processing unit may include one or more processors.

It can be understood that the access point device 400 according to the embodiments of the present application may correspond to the access point device in the method embodiments of the present application, and the above-mentioned and other operations and/or functions of each unit of the access point device 400 are respectively for implementing the corresponding processes of the access point device in the method 200 shown in FIGS. 2 to 22, which will not be repeated here for the sake of brevity.

FIG. 24 is a schematic block diagram showing a station device 500 in accrordance with the embodiments of the present application. As shown in FIG. 24, the station device 500 includes:
a processing unit 510, configured to change media access address (MAC) address information and identifier information of the station device based on an indication of an access point device, or autonomously change media access address (MAC) address information and identifier information of the station device.

In some embodiments, identifier information of a station device includes associated identifier (AID) information of the station device and/or unassociated identifier (UID) information of the station device.

In some embodiments, MAC address information after changed of a station device is pre-allocated by the access point device; and/or identifier information after changed of a station device is pre-allocated by the access point device.

In some embodiments, MAC address information after changed and identifier information after changed of a station device are determined by the access point device and the station device according to a preset rule.

In some embodiments, the MAC address information after changed of the station device is determined based on at least one of the following information:
MAC address information before changed of the station device, and identifier information before changed of the station device.

In some embodiments, identifier information after changed of the station device is determined based on at least one of the following information:
MAC address information before changed of the station device, identifier information before changed of the station device, and the MAC address after changed of the station device.

In some embodiments, the station device further includes:
a communication unit, configured to receive a first frame sent by the access point device (for example, the processing unit controls the communication unit to receive the first frame), where first frame is used to indicate changing MAC address information and identifier information of at least one station device, and the at least one station device includes the station device.

In some embodiments, the first frame includes first duration information, and the first duration information is used for determining a change time of the MAC address information and identifier information of the at least one station device.

In some embodiments, the first duration information is used for indicating a first duration, and the change time of the MAC address information and identifier information of the at least one station device is at a first moment, where the first moment is later than a moment when the at least one station device receives the first frame, and there is an interval of the first duration.

In some embodiments, the first frame includes derivation number information, and the derivation number information represents a number of derivations performed by the station device to determine MAC address information after changed and identifier information after changed.

In some embodiments, the first frame includes an identifier change element, and the identifier change element includes an identifier change time field used for indicating time information of changing MAC address information and identifier information; or
the identifier change element includes an identifier change time field and a derivation number field, where the identifier change time field is used for indicating time information of changing MAC address information and identifier information, and the derivation number field is used for indicating a number of derivations performed to derive MAC address information after changed and identifier information after changed.

In some embodiments, the first frame includes an identifier change element, and the identifier change element is used for indicating information of changing MAC address information and identifier information corresponding to one or more multicast groups

In some embodiments, the identifier change element includes an identifier change time field and a multicast group list field, the multicast group list field includes at least one multicast address field, where the identifier change time field is used for indicating time information of changing MAC address information and identifier information, and the multicast address field is used for indicating a multicast group whose MAC address information and identifier information are to be changed.

In some embodiments, the identifier change element includes a multicast group information list field, the multicast group information list field includes at least one multicast group information field, and each multicast group information field is used for indicating information of changing MAC address information and identifier information of a station device in a corresponding multicast group.

In some embodiments, each multicast group information field includes a multicast address field and an identifier change time field, where the multicast address field is used for indicating a multicast group whose MAC address information and identifier information are to be changed, and the identifier change time field is used for indicating time information of changing MAC address information and identifier information.

In some embodiments, each multicast group information field includes a multicast address field, an identifier change time field and derivation number information, where the multicast address field is used for indicating a multicast group of a corresponding multicast group of which MAC address information and identifier information are to be changed, the identifier change time field is used for indicating time information of changing MAC address information and identifier information by a corresponding multicast group, and the derivation number field is used for indicating a number of derivations performed by a station device in a corresponding multicast group to derive MAC address information after changed and identifier information after changed.

In some embodiments, the identifier change element includes a control field and an identifier change time field, where the control field is used for indicating that station devices in all multicast groups change MAC address information and identifier information, or all station devices that support changing MAC address information and identifier information change MAC address information and identifier information; and the identifier change time field is used for indicating time information of changing MAC address information and identifier information.

In some embodiments, the identifier change element includes a control field, an identifier change time field and a derivation number field, where the control field is used for indicating that station devices in all multicast groups change MAC address information and identifier information, or all station devices that support changing MAC address information and identifier information change MAC address information and identifier information; the identifier change time field is used for indicating time information of changing MAC address information and identifier information; and the derivation number field is used for indicating a number of derivations performed by a station device to derive MAC address information after changed and identifier information after changed.

In some embodiments, the first frame includes at least one identifier change element, each identifier change element corresponds to a multicast group, and each identifier change element is used for indicating information of changing MAC address information and identifier information corresponding to a multicast group.

In some embodiments, each identifier change element includes a multicast address field and an identifier change time field, where the multicast address field is used for indicating a multicast group whose MAC address information and identifier information are to be changed, and the identifier change time field is used for indicating time information of changing MAC address information and identifier information by a corresponding multicast group.

In some embodiments, each identifier change element includes a multicast address field, an identifier change time field and derivation number information, where the multicast address field is used for indicating a multicast group whose MAC address information and identifier information are to be changed, the identifier change time field is used for indicating time information of changing MAC address information and identifier information by a corresponding multicast group, and the derivation number field is used for indicating a number of derivations performed by a station device in a corresponding multicast group to derive MAC address information after changed and identifier information after changed.

In some embodiments, the first frame includes a traffic indication map (TIM) element, and the TIM element includes an identifier change time field used for indicating time information of changing MAC address information and identifier information.

In some embodiments, the first frame is sent in a broadcast manner.

In some embodiments, the at least one station device includes all station devices that support changing MAC address information and identifier information.

In some embodiments, the at least one station device includes station device(s) in one or more multicast groups.

In some embodiments, the first frame is sent in a multicast manner.

In some embodiments, the at least one station device includes a station device in a multicast group.

In some embodiments, the first frame is sent in a unicast manner.

In some embodiments, the first frame is further used to indicate MAC address information after changed and/or identifier information after changed of the station device.

In some embodiments, the first frame includes an identifier change element, and the identifier change element is used for indicating information of changing MAC address information and identifier information by the station device.

In some embodiments, the identifier change element includes at least one of the following fields:
an identifier change time field, used for indicating time information of changing the MAC address information and identifier information by the station device;
a MAC address field, used for indicating MAC address information after changed of the station device; and
an identifier field, used for indicating identifier information after changed of the station device.

In some embodiments, the identifier change element further includes a control field, and the control field includes at least one of the following fields:
a field of whether a MAC address exists, used for indicating whether the identifier change element includes the MAC address field; and
a field of whether an identifier exists, used for indicating whether the identifier change element includes the identifier field.

In some embodiments, the first frame is a management frame.

In some embodiments, the first frame is autonomously sent by the access point device.

In some embodiments, the first frame is sent by the access point device based on a request of a station device.

In some embodiments, the station device further includes:
a communication unit, configured to send a second frame to the access point device, where the second frame is used to request the access point device to change the MAC address information and identifier information of the at least one station device.

In some embodiments, a frame type of the second frame is used to indicate that the second frame is used to request changing the MAC address information and identifier information of the station device; or
the second frame includes first indication information, where the first indication information is used for indicating requesting changing the MAC address information and identifier information of the station device.

In some embodiments, the second frame is used to request the access point device to change the MAC address information and identifier information of the station device in a multicast manner or a broadcast manner.

In some embodiments, the second frame is used to request the access point device to change the MAC address information and identifier information of the station device in a unicast manner.

In some embodiments, the second frame includes time information of changing MAC address information and identifier information by the station device.

In some embodiments, the first frame includes time information indicated by the access point device to the station device for changing the MAC address information and identifier information.

In some embodiments, the station device further includes:
a communication unit, configured to receive a third frame sent by the access point device, where the third frame is used to indicate changing MAC address information of the at least one station device, and configured to receive a fourth frame sent by the access point device, where the fourth frame is used to indicate changing identifier information of the at least one station device.

In some embodiments, the third frame includes second duration information, and the second duration information is used for determining a change time of the MAC address information of the at least one station device; and
the fourth frame includes third duration information, and the third duration information is used for determining a change time of the identifier information of the at least one station device.

In some embodiments, the second duration information is used for indicating a second duration, and the change time of the MAC address information of the at least one station device is at a second moment, where the second moment is later than a moment when the at least one station device receives the third frame, and there is an interval of the second duration; and
the third duration information is used for indicating a third duration, and the change time of the identifier information of the at least one station device is at a third moment, where the third moment is later than a moment when the at least one station device receives the fourth frame, and there is an interval of the third duration.

In some embodiments, the second moment is the same as the third moment.

In some embodiments, changing, by the station device, the media access address (MAC) address information and identifier information of the station device based on the indication of the access point device, includes:
receiving, by the station device, a fifth frame sent by the access point device, where the fifth frame includes MAC address information after changed of the station device, and the fifth frame is used to indicate that the station device changes the MAC address information and identifier information.

In some embodiments, the fifth frame is a ready to be sent (RTS) frame.

In some embodiments, the station device further includes: a communication unit configured to send a sixth frame to the access point device, where the sixth frame includes MAC address information after changed of the station device, and the sixth frame is used to indicate that the station device is to change the MAC address information and identifier information.

In some embodiments, the sixth frame includes a ready to be sent (RTS) frame and/or a power-save poll (PS-Poll) frame.

In some embodiments, the station device further includes:
a communication unit, configured to exchange identifier change capability information with the access point device, where the identifier change capability information is used for indicating whether changing MAC address information and/or identifier information is supported.

In some embodiments, the identifier change capability information includes second indication information and third indication information, the second indication information is used for indicating whether changing MAC address information is supported, and the third indication information is used for indicating whether changing identifier information is supported.

In some embodiments, the identifier change capability information includes fourth indication information, and the fourth indication information is used for indicating whether changing MAC address information and identifier information is supported.

In some embodiments, the identifier change capability information is carried by at least one of the following frames:
a beacon frame, a probe request frame, a probe response frame, an association request frame, a reassociation request frame, an association response frame, and a reassociation response frame.

In some embodiments, the identifier change capability information is carried in an Extended Capabilities element and/or a privacy protection capability element, where the privacy protection capability element is used for carrying privacy protection capability information.

Optionally, in some embodiments, the communication unit may be a communication interface or a transceiver, or an input/output interface of a communication chip or a system on chip. The processing unit may include one or more processors.

It can be understood that the station device 500 according to the embodiments of the present application may correspond to the station device in the method embodiments of the present application, and the above-mentioned and other operations and/or functions of each unit of the station device 500 are respectively for implementing the corresponding processes of the station device in the method 200 shown in FIGS. 2 to 22, which will not be repeated here for the sake of brevity.

FIG. 25 is a schematic structural diagram of a communication device 600 provided by the embodiments of the present application. The communication device 600 shown in FIG. 25 includes a processor 610, and the processor 610 may call and run a computer program from a memory to implement the methods in the embodiments of the present application.

Optionally, as shown in FIG. 25, the communication device 600 may further include a memory 620. The processor 610 may call and run the computer program from the memory 620 to implement the methods in the embodiments of the present application.

The memory 620 may be a separate device independent of the processor 610, or may be integrated into the processor 610.

Optionally, as shown in FIG. 25, the communication device 600 may further include a transceiver 630, and the processor 610 may control the transceiver 630 to communicate with other devices, specifically, to transmit information or data to other devices, or to receive information or data transmitted by other devices.

The transceiver 630 may include a transmitter and a receiver. The transceiver 630 may further include an antenna. There may be one or more antennas.

Optionally, the communication device 600 may be the access point device in the embodiments of the present application, and the communication device 600 may implement the corresponding processes implemented by the access point device in each method in the embodiments of the present application, which will not be repeated here for the sake of brevity.

Optionally, the communication device 600 may be the station device in the embodiments of the present application, and the communication device 600 may implement the corresponding processes implemented by the station device in each method in the embodiments of the present application, which will not be repeated here for the sake of brevity.

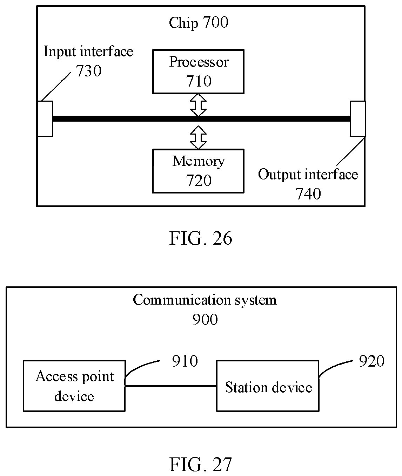

FIG. 26 is a schematic structural diagram of a chip of the embodiments of the present application. The chip 700 shown in FIG. 27 includes a processor 710, and the processor 710 may call and run a computer program from a memory to implement the methods in the embodiments of the present application.

Optionally, as shown in FIG. 26, the chip further includes a memory 720. The processor 710 may call and run the computer program from the memory 720 to implement the methods in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, specifically, may control the input interface 730 to obtain information or data sent by other devices or chips.

Optionally, the chip 700 may further include an output interface 740. The processor 710 may control the output interface 740 to communicate with other devices or chips, specifically, may control the output interface 740 to output information or data to other devices or chips.

Optionally, the chip may be applied to the access point device in the embodiments of the present application, and the chip may implement the corresponding processes implemented by the access point device in each method in the embodiments of the present application, which will not be repeated here for the sake of brevity.

Optionally, the chip may be applied to the station device in the embodiments of the present application, and the chip may implement the corresponding processes implemented by the station device in each method in the embodiments of the present application, which will not be repeated here for the sake of brevity.

It can be understood that the chip mentioned in the embodiments of the present application may be referred to as a system-level chip, a system chip, a chip system, a system-on-chip, or the like.

FIG. 27 is a schematic block diagram of a communication system 900 provided by the embodiments of the present application. As shown in FIG. 27, the communication system 900 includes an access point device 910 and a station device 920.

The access point device 910 may be used to implement the corresponding functions implemented by the access point device in the above-mentioned methods, and the station device 920 may be used to implement the corresponding functions implemented by the station device in the above-mentioned methods, which will not be repeated here for the sake of brevity.

It can be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a digital signal processor (DSP), an application specific integrated circuit (ASIC), a field programmable gate array (FPGA) or other programmable logic devices, a discrete gate or transistor logic device, or a discrete hardware component, which may implement or perform various methods, steps and logical block diagrams disclosed in the embodiments of the present application. The general-purpose processor may be a microprocessor, or the processor may also be any conventional processor. The steps of the method disclosed in combination with the embodiments of the present application may be directly embodied as being performed and completed by a hardware decoding processor, or by using a combination of hardware and software modules in the decoding processor. The software module may be located in a mature storage medium in the art such as a random memory, a flash memory, a read-only memory, a programmable read-only memory or electrically erasable programmable memory, a register, or the like. The storage medium is located in the memory, and the processor reads the information in the memory and completes the steps of the above methods in combination with its hardware.

It may be understood that the memory in the embodiments of the present application may be a volatile (transitory) memory or a non-volatile (non-transitory) memory, or may include both volatile and non-volatile memories. Herein, the non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It will be noted that the memory of the system and the method described herein is intended to include, but not limited to, these and any other suitable types of memories.

It can be understood that the above memory is exemplary but not limiting illustration, for example, the memory in embodiments of the present application may also be a static random access memory (static RAM, SRAM), a dynamic random access memory (dynamic RAM, DRAM), a synchronous DRAM (SDRAM), a double data rate SDRAM (DDR SDRAM), an enhanced SDRAM (ESDRAM), a synch link DRAM (SLDRAM), or a direct rambus RAM (DR RAM). That is, the memory in the embodiments of the present application is intended to include, but not limited to, these and any other suitable types of memories.

The embodiments of the present application further provide a computer-readable storage medium for storing a computer program.

Optionally, the computer-readable storage medium may be applied to the access point device in the embodiments of the present application, and the computer program causes a computer to perform the corresponding procedure implemented by the access point device in the various methods of the embodiments of the present application, which will not be repeated here for the sake of brevity.

Optionally, the computer-readable storage medium may be applied to the station device in the embodiments of the present application, and the computer program causes a computer to perform the corresponding procedure implemented by the station device in various methods of the embodiments of the present application, which will not be repeated here for the sake of brevity.

The embodiments of the present application further provide a computer program product including computer program instructions.

Optionally, the computer program product may be applied to the access point device in the embodiments of the present application, and the computer program instruction causes a computer to perform the corresponding procedure implemented by the access point device in the various methods of the embodiments of the present application, which will not be repeated here for the sake of brevity.

Optionally, the computer program product may be applied to the station device in the embodiments of the present application, and the computer program instruction causes a computer to perform the corresponding procedure implemented by the station device in various methods of the embodiments of the present application, which will not be repeated here for the sake of brevity.

The embodiments of the present application further provide a computer program.

In some embodiments, the computer program may be applied to the access point device in the embodiments of the present application, the computer program, when executed by a computer, causes the computer to perform the corresponding procedure implemented by the access point device in various methods of the embodiments of the present application, which will not be repeated here for the sake of brevity.

In some embodiments, the computer program may be applied to the station device in the embodiments of the present application, the computer program, when executed by a computer, causes the computer to perform the corresponding procedure implemented by the station device in various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It can be clearly understood by those skilled in the art that, for convenience and brevity of the description, the specific working procedures of the system, the device and the unit described above may refer to the corresponding procedures in the above method embodiments, which will not be repeated here.

In the several embodiments provided by the application, it can be understood that the disclosed system, device, and method may be implemented in other ways. For example, the device embodiments described above are only schematic, for example, division of the units is only division of logical functions, and there may be other division methods in an actual implementation, for example, a plurality of units or components may be combined or integrated into another system, or some features may be ignored or not performed. Another point is that the coupling or direct coupling or communicative connection between each other as shown or discussed may be indirect coupling or communicative connection of devices or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected depending on actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer-readable storage medium. For this understanding, the technical solution of the present application essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, a network device, or the like) to perform all or some of steps of the methods described in the various embodiments of the present application. And, the storage mediums mentioned above include a USB flash drive (U disk), a mobile hard disk, a read-only memory (ROM), a random access memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, **characterized by** comprising:
indicating, by an access point device, that at least one station device changes media access address (MAC) address information and identifier information of the at least one station device.

2. The method of claim 1, wherein identifier information of a station device comprises associated identifier (AID) information of the station device and/or unassociated identifier (UID) information of the station device.

3. The method of claim 1 or 2, wherein MAC address information after changed of a station device is pre-allocated by the access point device; and/or
identifier information after changed of a station device is pre-allocated by the access point device.

4. The method of claim 1 or 2, wherein MAC address information after changed and identifier information after changed of a station device are determined by the access point device and the station device according to a preset rule.

5. The method of claim 4, wherein the MAC address information after changed of the station device is determined based on at least one of following information:
MAC address information before changed of the station device, and identifier information before changed of the station device.

6. The method of claim 4 or 5, wherein the identifier information after changed of the station device is determined based on at least one of following information:
MAC address information before changed of the station device, identifier information before changed of the station device, and a MAC address after changed of the station device.

7. The method of any one of claims 1 to 6, wherein indicating, by the access point device, that the at least one station device changes the media access address (MAC) address information and identifier information of the at least one station device, comprises:
sending, by the access point device, a first frame to the at least one station device, wherein the first frame is used to indicate changing the MAC address information and identifier information of the at least one station device.

8. The method of claim 7, wherein the first frame comprises first duration information, and the first duration information is used for determining a change time of the MAC address information and identifier information of the at least one station device.

9. The method of claim 8, wherein the first duration information is used for indicating a first duration, and the change time of the MAC address information and identifier information of the at least one station device is at a first moment, wherein the first moment is later than a moment when the at least one station device receives the first frame, and there is an interval of the first duration.

10. The method of any one of claims 7 to 9, wherein the first frame comprises derivation number information, and the derivation number information represents a number of derivations performed by the station device to determine MAC address information after changed and identifier information after changed.

11. The method of any one of claims 7 to 10, wherein the first frame comprises an identifier change element, and the identifier change element comprises an identifier change time field used for indicating time information of changing MAC address information and identifier information; or
the identifier change element comprises an identifier change time field and a derivation number field, wherein the identifier change time field is used for indicating time information of changing MAC address information and the identifier information, and the derivation number field is used for indicating a number of derivations performed to derive MAC address information after changed and identifier information after changed.

12. The method of any one of claims 7 to 10, wherein the first frame comprises an identifier change element, and the identifier change element is used for indicating information of changing MAC address information and identifier information corresponding to one or more multicast groups.

13. The method of claim 12, wherein the identifier change element comprises an identifier change time field and a multicast group list field, and the multicast group list field comprises at least one multicast address field, wherein the identifier change time field is used for indicating time information of changing MAC address information and identifier information, and the multicast address field is used for indicating a multicast group whose MAC address information and identifier information are to be changed.

14. The method of claim 12, wherein the identifier change element comprises a multicast group information list field, and the multicast group information list field comprises at least one multicast group information field, wherein each multicast group information field is used for indicating information of changing MAC address information and identifier information of a station device in a corresponding multicast group.

15. The method of claim 14, wherein each multicast group information field comprises a multicast address field and an identifier change time field, wherein the multicast address field is used for indicating a multicast group whose MAC address information and identifier information are to be changed, and the identifier change time field is used for indicating time information of changing MAC address information and identifier information.

16. The method of claim 14, wherein each multicast group information field comprises a multicast address field, an identifier change time field and derivation number information, wherein the multicast address field is used for indicating a multicast group of a corresponding multicast group of which MAC address information and identifier information are to be changed, the identifier change time field is used for indicating time information of changing the MAC address information and identifier information by the corresponding multicast group, and the derivation number field is used for indicating a number of derivations performed by a station device in a corresponding multicast group to derive MAC address information after changed and identifier information after changed.

17. The method of claim 12, wherein the identifier change element comprises a control field and an identifier change time field, wherein the control field is used for indicating that station devices in all multicast groups change MAC address information and identifier information, or all station devices that support changing MAC address information and identifier information change MAC address information and identifier information, and the identifier change time field is used for indicating time information of changing MAC address information and identifier information.

18. The method of claim 12, wherein the identifier change element comprises a control field, an identifier change time field and a derivation number field, wherein the control field is used for indicating that station devices in all multicast groups change MAC address information and identifier information, or all station devices that support changing MAC address information and identifier information change MAC address information and identifier information, the identifier change time field is used for indicating time information of changing MAC address information and identifier information, and the derivation number field is used for indicating a number of derivations performed by a station device to derive MAC address information after changed and identifier information after changed.

19. The method of any one of claims 7 to 10, wherein the first frame comprises at least one identifier change element, and each identifier change element corresponds to a multicast group, wherein each identifier change element is used for indicating information of changing MAC address information and identifier information corresponding to a multicast group.

20. The method of claim 19, wherein each identifier change element comprises a multicast address field and an identifier change time field, wherein the multicast address field is used for indicating a multicast group whose MAC address information and identifier information are to be changed, and the identifier change time field is used for indicating time information of changing MAC address information and identifier information by a corresponding multicast group.

21. The method of claim 19, wherein each identifier change element comprises a multicast address field, an identifier change time field and derivation number information, wherein the multicast address field is used for indicating a multicast group whose MAC address information and identifier information are to be changed, the identifier change time field is used for indicating time information of changing MAC address information and identifier information by a corresponding multicast group, and the derivation number field is used for indicating a number of derivations performed by a station device in a corresponding multicast group to derive MAC address information after changed and identifier information after changed.

22. The method of any one of claims 7 to 10, wherein the first frame comprises a traffic indication map (TIM) element, and the TIM element comprises an identifier change time field used for indicating time information of changing MAC address information and identifier information.

23. The method of any one of claims 7 to 22, wherein the first frame is sent in a broadcast manner.

24. The method of claim 23, wherein the at least one station device comprises all station devices that support changing MAC address information and identifier information.

25. The method of claim 23, wherein the at least one station device comprises station device(s) in one or more multicast groups.

26. The method of any one of claims 7 to 22, wherein the first frame is sent in a multicast manner.

27. The method of claim 26, wherein the at least one station device comprises a station device in a multicast group.

28. The method of any one of claims 7 to 10, wherein the first frame is sent in a unicast manner.

29. The method of claim 28, wherein the first frame is further used to indicate MAC address information after changed and/or identifier information after changed of a station device.

30. The method of claim 28 or 29, wherein the first frame comprises an identifier change element, and the identifier change element is used for indicating information of changing MAC address information and identifier information by a station device.

31. The method of claim 30, wherein the identifier change element comprises at least one of following fields:
an identifier change time field, used for indicating time information of changing the MAC address information and identifier information by the station device;
a MAC address field, used for indicating MAC address information after changed of the station device; and
an identifier field, used for indicating identifier information after changed of the station device.

32. The method of claim 31, wherein the identifier change element further comprises a control field, and the control field comprises at least one of following fields:
a field of whether a MAC address exists, used for indicating whether the identifier change element comprises the MAC address field; and
a field of whether an identifier exists, used for indicating whether the identifier change element comprises the identifier field.

33. The method of any one of claims 7 to 32, wherein the first frame is a management frame.

34. The method of any one of claims 7 to 33, wherein the first frame is autonomously sent by the access point device.

35. The method of any one of claims 7 to 33, wherein the first frame is sent by the access point device based on a request of a station device.

36. The method of claim 35, further comprising:
receiving, by the access point device, a second frame from the station device, wherein the second frame is used to request the access point device to change the MAC address information and identifier information of the at least one station device.

37. The method of claim 36, wherein a frame type of the second frame is used for indicating that the second frame is used to request changing the MAC address information and identifier information of the station device; or
the second frame comprises first indication information, wherein the first indication information is used for requesting changing the MAC address information and identifier information of the station device.

38. The method of claim 36 or 37, wherein the second frame is used to request the access point device to change the MAC address information and identifier information of the station device in a multicast manner or a broadcast manner.

39. The method of claim 36 or 37, wherein the second frame is used to request the access point device to change the MAC address information and identifier information of the station device in a unicast manner.

40. The method of claim 39, wherein the second frame comprises time information of changing MAC address information and identifier information by the station device.

41. The method of claim 39 or 40, wherein the first frame comprises time information indicated by the access point device to the station device for changing the MAC address information and identifier information.

42. The method of any one of claims 1 to 6, wherein indicating, by the access point device, that the at least one station device changes the media access address (MAC) address information and identifier information of the at least one station device, comprises:
sending, by the access point device, a third frame to the at least one station device, wherein the third frame is used to indicate changing the MAC address information of the at least one station device; and
sending, by the access point device, a fourth frame to the at least one station device, wherein the fourth frame is used to indicate changing the identifier information of the at least one station device.

43. The method of claim 42, wherein the third frame comprises second duration information, and the second duration information is used for determining a change time of the MAC address information of the at least one station device; and
the fourth frame comprises third duration information, and the third duration information is used for determining a change time of the identifier information of the at least one station device.

44. The method of claim 43, wherein the second duration information is used for indicating a second duration, and the change time of the MAC address information of the at least one station device is at a second moment, wherein the second moment is later than a moment when the at least one station device receives the third frame, and there is an interval of the second duration; and
the third duration information is used for indicating a third duration, and the change time of the identifier information of the at least one station device is at a third moment, wherein the third moment is later than a moment when the at least one station device receives the fourth frame, and there is an interval of the third duration.

45. The method of claim 44, wherein the second moment is same as the third moment.

46. The method of any one of claims 1 to 6, wherein indicating, by the access point device, that the at least one station device changes the media access address (MAC) address information and identifier information of the at least one station device, comprises:
sending, by the access point device, a fifth frame to a station device, wherein the fifth frame comprises MAC address information after changed of the station device, and the fifth frame is used to indicate that the station device changes the MAC address information and identifier information.

47. The method of claim 46, wherein the fifth frame is a ready to send (RTS) frame.

48. The method of any one of claims 1 to 47, further comprising:
exchanging, by the access point device, identifier change capability information with a station device, wherein the identifier change capability information is used for indicating whether changing MAC address information and/or identifier information is supported.

49. The method of claim 48, wherein the identifier change capability information comprises second indication information and third indication information, wherein the second indication information is used for indicating whether changing the MAC address information is supported, and the third indication information is used for indicating whether changing the identifier information is supported.

50. The method of claim 48, wherein the identifier change capability information comprises fourth indication information, and the fourth indication information is used for indicating whether changing the MAC address information and identifier information is supported.

51. The method of any one of claims 48 to 50, wherein the identifier change capability information is carried in an Extended Capabilities element and/or a privacy protection capability element, wherein the privacy protection capability element is used for carrying privacy protection capability information.

52. A wireless communication method, **characterized by** comprising:
changing, by a station device, media access address (MAC) address information and identifier information of the station device based on indication of an access point device; or
autonomously changing, by a station device, media access address (MAC) address information and identifier information of the station device.

53. The method of claim 52, wherein the identifier information of the station device comprises associated identifier (AID) information of the station device and/or unassociated identifier (UID) information of the station device.

54. The method of claim 52 or 53, wherein MAC address information after changed of the station device is pre-allocated by the access point device; and/or
identifier information after changed of the station device is pre-allocated by the access point device.

55. The method of claim 52 or 53, wherein MAC address information after changed and identifier information after changed of the station device are determined by the access point device and the station device according to a preset rule.

56. The method of claim 55, wherein the MAC address information after changed of the station device is determined based on at least one of following information:
MAC address information before changed of the station device, and identifier information before changed of the station device.

57. The method of claim 55 or 56, wherein the identifier information after changed of the station device is determined based on at least one of following information:
MAC address information before changed of the station device, identifier information before changed of the station device, and a MAC address after changed of the station device.

58. The method of any one of claims 52 to 57, wherein changing, by the station device, the media access address (MAC) address information and identifier information of the station device based on the indication of the access point device, comprises:
receiving, by the station device, a first frame sent by the access point device, wherein the first frame is used to indicate changing MAC address information and identifier information of at least one station device, and the at least one station device comprises the station device.

59. The method of claim 58, wherein the first frame comprises first duration information, and the first duration information is used for determining a change time of the MAC address information and identifier information of the at least one station device.

60. The method of claim 59, wherein the first duration information is used for indicating a first duration, and the change time of the MAC address information and identifier information of the at least one station device is at a first moment, wherein the first moment is later than a moment when the at least one station device receives the first frame, and there is an interval of the first duration.

61. The method of any one of claims 58 to 60, wherein the first frame comprises derivation number information, and the derivation number information represents a number of derivations performed by the station device to determine MAC address information after changed and identifier information after changed.

62. The method of any one of claims 58 to 61, wherein the first frame comprises an identifier change element, and the identifier change element comprises an identifier change time field used for indicating time information of changing MAC address information and identifier information; or
the identifier change element comprises an identifier change time field and a derivation number field, wherein the identifier change time field is used for indicating time information of changing MAC address information and identifier information, and the derivation number field is used for indicating a number of derivations performed to derive MAC address information after changed and identifier information after changed.

63. The method of any one of claims 58 to 61, wherein the first frame comprises an identifier change element, and the identifier change element is used for indicating information of changing MAC address information and identifier information corresponding to one or more multicast groups.

64. The method of claim 63, wherein the identifier change element comprises an identifier change time field and a multicast group list field, and the multicast group list field comprises at least one multicast address field, wherein the identifier change time field is used for indicating time information of changing MAC address information and identifier information, and the multicast address field is used for indicating a multicast group whose MAC address information and identifier information are to be changed.

65. The method of claim 63, wherein the identifier change element comprises a multicast group information list field, and multicast group information list field comprises at least one multicast group information field, wherein each multicast group information field is used for indicating information of changing MAC address information and identifier information of a station device in a corresponding multicast group.

66. The method of claim 65, wherein each multicast group information field comprises a multicast address field and an identifier change time field, wherein the multicast address field is used for indicating a multicast group whose MAC address information and identifier information are to be changed, and the identifier change time field is used for indicating time information of changing MAC address information and identifier information.

67. The method of claim 65, wherein each multicast group information field comprises a multicast address field, an identifier change time field and derivation number information, wherein the multicast address field is used for indicating a multicast group of a corresponding multicast group of which MAC address information and identifier information are to be changed, the identifier change time field is used for indicating time information of changing MAC address information and identifier information by a corresponding multicast group, and the derivation number field is used for indicating a number of derivations performed by a station device in a corresponding multicast group to derive MAC address information after changed and identifier information after changed.

68. The method of claim 63, wherein the identifier change element comprises a control field and an identifier change time field, wherein the control field is used for indicating that station devices in all multicast groups change MAC address information and identifier information, or all station devices that support changing MAC address information and identifier information change MAC address information and identifier information, and the identifier change time field is used for indicating time information of changing MAC address information and identifier information.

69. The method of claim 63, wherein the identifier change element comprises a control field, an identifier change time field and a derivation number field, wherein the control field is used for indicating that station devices in all multicast groups change MAC address information and identifier information, or all station devices that support changing MAC address information and identifier information change MAC address information and identifier information, the identifier change time field is used for indicating time information of changing MAC address information and identifier information, and the derivation number field is used for indicating a number of derivations performed by a station device to derive MAC address information after changed and identifier information after changed.

70. The method of any one of claims 58 to 61, wherein the first frame comprises at least one identifier change element, and each identifier change element corresponds to a multicast group, wherein each identifier change element is used for indicating information of changing MAC address information and identifier information corresponding to a multicast group.

71. The method of claim 70, wherein each identifier change element comprises a multicast address field and an identifier change time field, wherein the multicast address field is used for indicating a multicast group whose MAC address information and identifier information are to be changed, and the identifier change time field is used for indicating time information of changing MAC address information and identifier information by a corresponding multicast group.

72. The method of claim 70, wherein each identifier change element comprises a multicast address field, an identifier change time field and derivation number information, wherein the multicast address field is used for indicating a multicast group whose MAC address information and identifier information are to be changed, the identifier change time field is used for indicating time information of changing MAC address information and identifier information by a corresponding multicast group, and the derivation number field is used for indicating a number of derivations performed by a station device in a corresponding multicast group to derive MAC address information after changed and identifier information after changed.

73. The method of any one of claims 58 to 61, wherein the first frame comprises a traffic indication map (TIM) element, and the TIM element comprises an identifier change time field used for indicating time information of changing MAC address information and identifier information.

74. The method of any one of claims 58 to 73, wherein the first frame is sent in a broadcast manner.

75. The method of claim 74, wherein the at least one station device comprises all station devices that support changing MAC address information and identifier information.

76. The method of claim 75, wherein the at least one station device comprises station device(s) in one or more multicast groups.

77. The method of any one of claims 58 to 73, wherein the first frame is sent in a multicast manner.

78. The method of claim 75, wherein the at least one station device comprises a station device in a multicast group.

79. The method of any one of claims 58 to 61, wherein the first frame is sent in a unicast manner.

80. The method of claim 79, wherein the first frame is further used to indicate MAC address information after changed and/or identifier information after changed of the station device.

81. The method of claim 79 or 80, wherein the first frame comprises an identifier change element, and the identifier change element is used for indicating information of changing the MAC address information and identifier information by the station device.

82. The method of claim 81, wherein the identifier change element comprises at least one of following fields:
an identifier change time field, used for indicating time information of changing the MAC address information and identifier information by the station device;
a MAC address field, used for indicating MAC address information after changed of the station device; and
an identifier field, used for indicating identifier information after changed of the station device.

83. The method of claim 82, wherein the identifier change element further comprises a control field, and the control field comprises at least one of following fields:
a field of whether a MAC address exists, used for indicating whether the identifier change element comprises the MAC address field; and
a field of whether an identifier exists, used for indicating whether the identifier change element comprises the identifier field.

84. The method of any one of claims 59 to 83, wherein the first frame is a management frame.

85. The method of any one of claims 59 to 84, wherein the first frame is autonomously sent by the access point device.

86. The method of any one of claims 59 to 84, wherein the first frame is sent by the access point device based on a request of a station device.

87. The method of claim 86, further comprising:
sending, by the station device, a second frame to the access point device, wherein the second frame is used to request the access point device to change the MAC address information and identifier information of the at least one station device.

88. The method of claim 87, wherein a frame type of the second frame is used for indicating that the second frame is used to request changing the MAC address information and identifier information of the station device; or
the second frame comprises first indication information, wherein the first indication information is used for indicating requesting changing the MAC address information and identifier information of the station device.

89. The method of claim 87 or 88, wherein the second frame is used to request the access point device to change the MAC address information and identifier information of the station device in a multicast manner or a broadcast manner.

90. The method of claim 87 or 88, wherein the second frame is used to request the access point device to change the MAC address information and identifier information of the station device in a unicast manner.

91. The method of claim 90, wherein the second frame comprises time information of changing MAC address information and identifier information by the station device.

92. The method of claim 90 or 91, wherein the first frame comprises time information indicated by the access point device to the station device for changing the MAC address information and identifier information.

93. The method of any one of claims 52 to 57, wherein changing, by the station device, the media access address (MAC) address information and identifier information of the station device based on the indication of the access point device, comprises:
receiving, by the station device, a third frame sent by the access point device, wherein the third frame is used to indicate changing MAC address information of at least one station device; and
receiving, by the station device, a fourth frame sent by the access point device, wherein the fourth frame is used to indicate changing identifier information of the at least one station device.

94. The method of claim 93, wherein the third frame comprises second duration information, and the second duration information is used for determining a change time of the MAC address information of the at least one station device; and
the fourth frame comprises third duration information, and the third duration information is used for determining a change time of the identifier information of the at least one station device.

95. The method of claim 94, wherein the second duration information is used for indicating a second duration, and the change time of the MAC address information of the at least one station device is at a second moment, wherein the second moment is later than a moment when the at least one station device receives the third frame, and there is an interval of the second duration; and
the third duration information is used for indicating a third duration, and the change time of the identifier information of the at least one station device is at a third moment, wherein the third moment is later than a moment when the at least one station device receives the fourth frame, and there is an interval of the third duration.

96. The method of claim 95, wherein the second moment is same as the third moment.

97. The method of any one of claims 52 to 57, wherein changing, by the station device, the media access address (MAC) address information and identifier information of the station device based on the indication of the access point device, comprises:
receiving, by the station device, a fifth frame sent by the access point device, wherein the fifth frame comprises MAC address information after changed of the station device, and the fifth frame is used to indicate that the station device changes the MAC address information and identifier information.

98. The method of claim 97, wherein the fifth frame is a ready to be sent (RTS) frame.

99. The method of any one of claims 52 to 57, wherein autonomously changing, by the station device, the media access address (MAC) address information and identifier information of the station device, comprises:
sending, by the station device, a sixth frame to the access point device, wherein the sixth frame comprises MAC address information after changed of the station device, and the sixth frame is used to indicate that the station device is to change the MAC address information and identifier information.

100. The method of claim 99, wherein the sixth frame comprises a ready to be sent (RTS) frame and/or a power-save poll (PS-Poll) frame.

101. The method of any one of claims 52 to 100, further comprising:
exchanging, by the station device, identifier change capability information with the access point device, wherein the identifier change capability information is used for indicating whether changing MAC address information and/or identifier information is supported.

102. The method of claim 101, wherein the identifier change capability information comprises second indication information and third indication information, wherein the second indication information is used for indicating whether changing the MAC address information is supported, and the third indication information is used for indicating whether changing the identifier information is supported.

103. The method of claim 101, wherein the identifier change capability information comprises fourth indication information, and the fourth indication information is used for indicating whether changing the MAC address information and identifier information is supported.

104. The method of any one of claims 101 to 103, wherein the identifier change capability information is carried by at least one of following frames:
a beacon frame, a probe request frame, a probe response frame, an association request frame, a reassociation request frame, an association response frame, a reassociation response frame.

105. The method of any one of claims 101 to 104, wherein the identifier change capability information is carried in an Extended Capabilities element and/or a privacy protection capability element, wherein the privacy protection capability element is used for carrying privacy protection capability information.

106. An access point device, **characterized by** comprising:
a processing unit, configured to indicate that at least one station device changes media access address (MAC) address information and identifier information of the at least one station device.

107. A station device, **characterized by** comprising:
a processing unit, configured to change media access address (MAC) address information and identifier information of the station device based on indication of an access point device, or autonomously change the media access address (MAC) address information and identifier information of the station device.

108. An access point device, comprising a processor and a memory, wherein the memory is configured to store a computer program, and the processor is configured to call and run the computer program stored in the memory, to perform the method of any one of claims 1 to 51.

109. A station device, comprising a processor and a memory, wherein the memory is configured to store a computer program, and the processor is configured to call and run the computer program stored in the memory, to perform the method of any one of claims 52 to 105.

110. A chip, comprising a processor configured to call and run a computer program from a memory, to cause a device equipped with the chip to perform the method of any one of claims 1 to 51, or the method of any one of claims 52 to 105.

111. A computer-readable storage medium, being configured to store a computer program, wherein the computer program causes a computer to perform the method of any one of claims 1 to 51, or the method of any one of claims 52 to 105.

112. A computer program product, comprising computer program instructions, wherein the computer program instructions cause a computer to perform the method of any one of claims 1 to 51, or the method of any one of claims 52 to 105.

113. A computer program, wherein the computer program causes a computer to perform the method of any one of claims 1 to 51, or the method of any one of claims 52 to 105.
